# EUROPEAN PATENT APPLICATION

(11) **EP 4 621 027 A1**
(43) Date of publication of application: **24.09.2025**
(21) Application number: 23891448.5
(22) Date of filing: 09.11.2023
(51) Int. Cl.: C09K 5/06

(54) **COLD STORAGE MATERIAL COMPOSITION AND USE THEREOF**

(30) Priority: 16.11.2022 JP 2022183557
(71) Applicant: Kaneka Corporation, Osaka-shi, Osaka 530-8288 (JP)
(72) Inventor: UEDA, Toru, Settsu-shi, Osaka 566-0072 (JP)
(74) Representative: Vossius & Partner Patentanwälte Rechtsanwälte mbB
(86) International application number: PCT/JP2023/040325
(87) International publication number: WO 2024/106296

(57) **Abstract**

It is an object to provide (i) a cold storage material composition that is excellent in melting temperature and stability of the melting temperature and (ii) a technique for using the cold storage material composition. The object is attained with a cold storage material composition containing: water; lithium ions; bromide ions; a given amount of a crystal nucleating agent; and a given amount(s) of a defoaming agent and/or an alkali metal salt of a higher fatty acid.

## Description

### Technical Field

The present invention relates to (i) a cold storage material composition for controlling a temperature of an article and (ii) a technique for using the cold storage material composition. The present invention more specifically relates to a cold storage material composition, a cold storage material including the cold storage material composition, a transport container including the cold storage material, a method of producing the cold storage material composition, and a method of using the cold storage material composition.

### Background Art

Conventionally, various heat storage material compositions or cold storage material compositions using latent heat have been known, and used in a variety of fields including heating and cooling systems and storage and transportation of articles.

For example, some of pharmaceutical products, specimens, and the like used in medical facilities such as hospitals and some of foods and the like available in supermarkets and the like need to be kept at a constant temperature in a given temperature range for a given period of time during transportation or storage so that their qualities are maintained.

Examples of a method of transporting or storing articles such as pharmaceutical products, medical devices, cells, specimens, organs, chemical substances, and foods in a state in which the articles are kept at a constant temperature conventionally include the following method: That is, a method in which (i) a cold storage material, which has been frozen and solidified in advance, is placed in a container having a thermal insulation property to prepare a temperature keeping container and (ii) an article housed in the temperature keeping container is transported or stored in a state in which the temperature of the article is maintained by using latent heat of melting of the cold storage material. To maintain the above-described article to be kept at a constant temperature (hereinafter also referred to as "temperature control target article") in the given temperature (hereinafter also referred to as "control temperature") range for an extended period of time, a cold storage material having a melting temperature in the given temperature range is preferably used.

Some of the temperature control target articles need to be transported at control temperatures of, for example, not higher than -30°C, preferably not higher than -50°C, and more preferably not higher than -66°C. To meet these control temperatures, dry ice has conventionally been used as a cold storage material. Dry ice is inexpensive and versatile. However, dry ice has the problem of, for example, being treated as a hazardous material in a case of transportation, air transportation in particular, and being limited in the amount loaded when used as a cold storage material for use in a temperature keeping container (transport container). This is because dry ice expands in volume when sublimating (phase transition from a solid to a gas).

As a cold storage material that can be used in a low temperature range and does not involve phase transition to a gas, a cold storage material composition using an aqueous inorganic salt solution containing water and a specific inorganic salt has been disclosed.

For example, Patent Literature 1 discloses a cold storage material composition which contains 6 mol of calcium chloride (5.6 mol% relative to the total molar quantity of the cold storage material composition) and 2 mol of sodium chloride (1.9 mol% relative to the total molar quantity of the cold storage material composition) relative to 100 mol of water, which contains, as a thickener, 1% by weight of high viscosity-type hydroxyethyl cellulose relative to the total weight of the cold storage material composition, and which has a melting temperature of -54.7°C.

Further, Patent Literature 2 discloses a refrigerant comprising water and a solute containing lithium chloride and sodium chloride, the lithium chloride being contained in the highest weight-based percentage among the components of the solute.

Moreover, Patent Literature 3 discloses a heat storage material which comprises an aqueous lithium bromide solution and in which a lithium bromide concentration is not more than 55wt%.

Furthermore, Patent Literature 4 discloses a heat storage material which comprises an aqueous lithium bromide solution, in which a lithium bromide concentration is not less than 38wt%, and which contains a crystal nucleating agent.

### Citation List

### [Patent Literature]

[Patent Literature 1]
   International publication No. WO2016/204284
[Patent Literature 2]
   Japanese Patent Application Publication No. 2017-128622
[Patent Literature 3]
   U.K. Patent Application Publication No. 2600445 (GB, A)
[Patent Literature 4]
   U.K. Patent Application Publication No. 2600510 (GB, A)

### Summary of Invention

### Technical Problem

However, the above-described conventional cold storage material compositions still have room for improvement from the viewpoint of their melting temperatures and/or the stability of the melting temperatures.

Under the circumstances, an embodiment of the present invention provides (i) a novel cold storage material composition that is excellent in melting temperature and stability of the melting temperature and (ii) a technique for using the novel cold storage material composition.

### Solution to Problem

The inventors of the present invention conducted diligent studies in order to attain the above object, and consequently obtained novel findings that a cold storage material composition that is excellent in melting temperature and stability of the melting temperature is obtained by further blending a given amount of a crystal nucleating agent and a given amount(s) of a defoaming agent and/or an alkali metal salt of a higher fatty acid with a cold storage material composition that contains water, lithium ions, and bromide ions. The inventors of the present invention thus completed the present invention.

That is, a cold storage material composition in accordance with an embodiment of the present invention is a cold storage material composition containing: water; lithium ions; bromide ions; a crystal nucleating agent; and a defoaming agent and/or an alkali metal salt of a higher fatty acid, the crystal nucleating agent being contained in an amount of not less than 2.0 mol relative to 100 mol of the water, the defoaming agent and/or the alkali metal salt of the higher fatty acid being contained in a total amount of not less than 0.0025% by weight relative to 100% by weight of the cold storage material composition.

A method of using a cold storage material composition in accordance with an embodiment of the present invention is a method of using a cold storage material composition, including: a solidifying step of keeping a cold storage material composition at a temperature lower than a melting temperature of the cold storage material composition to solidify the cold storage material composition, the cold storage material composition containing water, lithium ions, bromide ions, a crystal nucleating agent, and a defoaming agent and/or an alkali metal salt of a higher fatty acid; and a maintaining step of maintaining part or whole of a target object at a temperature identical to the melting temperature of the cold storage material composition in an environment at a temperature which exceeds the melting temperature of the cold storage material composition, in the cold storage material composition, the crystal nucleating agent being contained in an amount of not less than 2.0 mol relative to 100 mol of the water, the defoaming agent and/or the alkali metal salt of the higher fatty acid being contained in a total amount of not less than 0.0025% by weight relative to 100% by weight of the cold storage material composition.

### Advantageous Effects of Invention

In an embodiment of the present invention, it is possible to provide, for example, a cold storage material composition that is excellent in stability of a melting temperature.

### Brief Description of Drawings

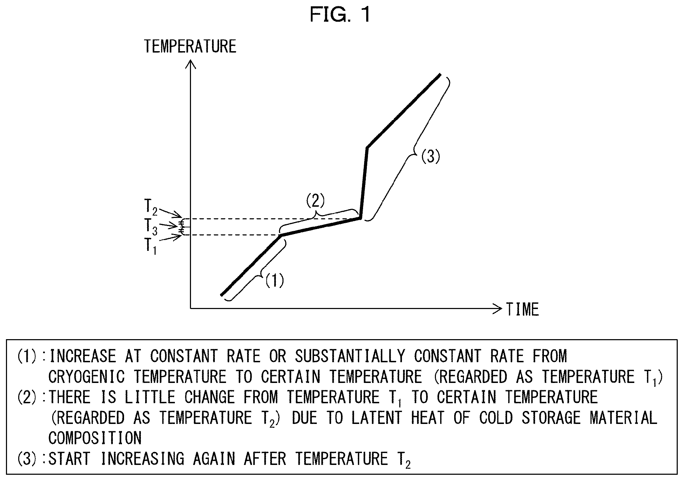

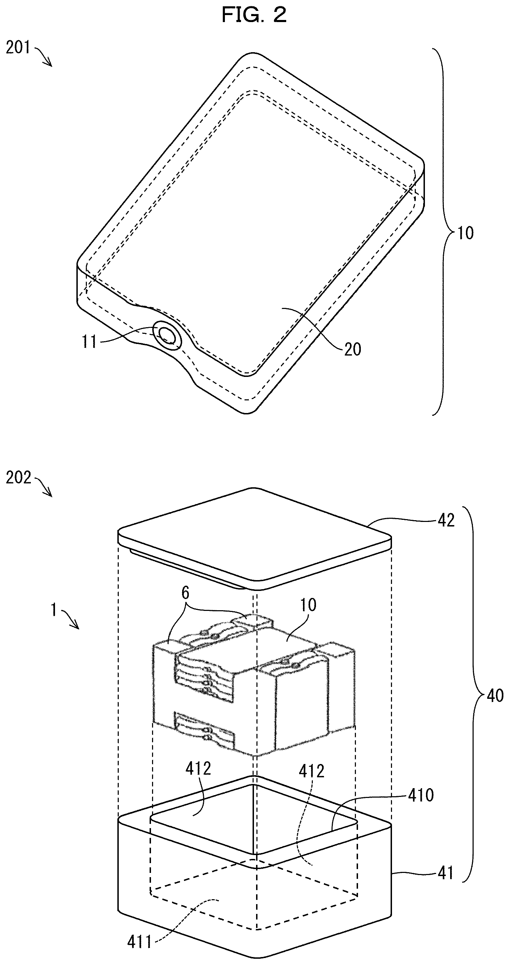

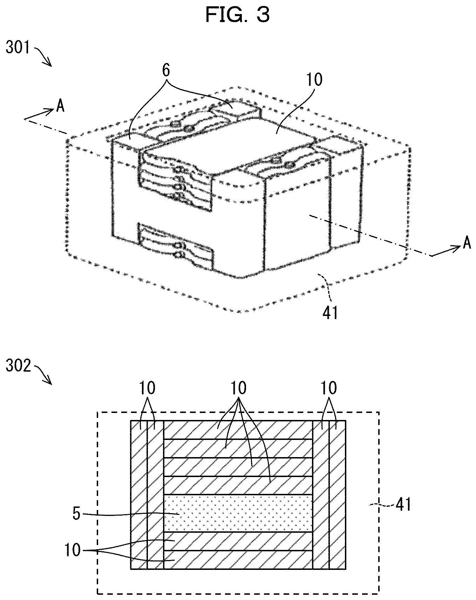

Fig. 1 is a graph obtained by plotting the temperature of a cold storage material composition in accordance with an embodiment of the present invention versus time in a case where the cold storage material composition in a solidified state was placed in a thermostatic bath and then the temperature of the thermostatic bath was increased from a cryogenic temperature (e.g., -80°C) at a constant temperature increase rate. 201 of Fig. 2 is a perspective view schematically illustrating an example of a cold storage material in accordance with an embodiment of the present invention. 202 of Fig. 2 is an exploded perspective view schematically illustrating an example of a transport container in accordance with an embodiment of the present invention. 301 of Fig. 3 is a perspective view schematically illustrating the inside of the transport container in accordance with an embodiment of the present invention. 302 of Fig. 3 is a crosssectional view schematically illustrating a cross-section taken along the line A-A in 301 of Fig. 3.

### Description of Embodiments

The following description will discuss embodiments of the present invention. The present invention is not, however, limited to these embodiments. The present invention is not limited to any configurations described below, and can be altered in various ways within the scope of the claims. The technical scope of the present invention also encompasses embodiments and examples derived by a proper combination of technical means disclosed in differing embodiments and examples. Furthermore, a new technical feature can be formed by combining technical means disclosed in differing embodiments. All academic and patent documents cited in the present specification are incorporated herein by reference. Any numerical range expressed as "A to B" herein means "not less than A (A or more) and not more than B (B or less)" unless otherwise specified.

### [1. Technical idea of an embodiment of the present invention]

In pursuing investigations into a cold storage material composition in which an aqueous inorganic salt solution was used, the inventors of the present invention found a case where a melting temperature of a conventional cold storage material composition in which an aqueous inorganic salt solution was used as disclosed in the above-described Patent Literatures 1 and 2 was not stabilized. More specifically, the inventors of the present invention uniquely found a case where, in a case where a cycle test in which melting and solidification (freezing) were repeated a plurality of times with an identical temperature profile was carried out with respect to a cold storage material composition in which an aqueous inorganic salt solution was used, two different melting temperatures were detected in spite of no change in composition of an inorganic salt (composition of ions derived from the inorganic salt) contained in the cold storage material composition.

A temperature (control temperature) at which a cold storage material composition can maintain the temperatures of temperature control target articles depends on the melting temperature of the cold storage material composition. Therefore, in order to stably control a wider variety of temperature control target articles, it is preferable to localize the melting temperature of the cold storage material composition at one of the above-described two melting temperatures, in particular, a lower one of the two melting temperatures, i.e., increase a frequency at which the lower one of the two melting temperatures is detected in a cycle test. In the present specification, stabilizing the melting temperature of a cold storage material composition means, regarding the melting temperature of the cold storage material composition, increasing a frequency at which a lower one of two melting temperatures that are detected in a cycle test is detected. A cold storage material composition for which a lower one of two melting temperatures is detected at a certain frequency or more in a cycle test is referred to as a cold storage material composition that is excellent in melting temperature and stability of the melting temperature.

On the basis of the above unique findings, the inventors of the present invention conducted diligent studies for the purpose of providing a cold storage material composition whose melting temperature is stabilized, in other words, which is excellent in melting temperature and stability of the melting temperature.

As a result, the inventors of the present invention uniquely obtained the following findings, and completed the present invention. That is, it is surprisingly possible to increase a frequency at which a lower one of two melting temperatures that can be detected in a cycle test of a cold storage material composition is detected, i.e., it is possible to obtain a cold storage material composition that is excellent in melting temperature and stability of the melting temperature, by causing the composition to contain water, lithium ions (Li⁺), and bromide ions (Br⁻) and further contain a given amount of a crystal nucleating agent and a given amount(s) of a defoaming agent and/or an alkali metal salt of a higher fatty acid.

Conventionally, a defoaming agent has been used for the purpose of removing air bubbles in a composition. The findings that it is possible to stabilize the melting temperature of a cold storage material composition with use of a defoaming agent and/or an alkali metal salt of a higher fatty acid, each of which has not been known at all to have such an effect on a melting temperature, are surprising findings that the inventors of the present invention obtained, and can be said to be findings that cannot be expected at all from any conventional technique.

### [2. Cold storage material composition]

A cold storage material composition in accordance with an embodiment of the present invention is a cold storage material composition containing water, lithium ions, bromide ions, a crystal nucleating agent, and a defoaming agent and/or an alkali metal salt of a higher fatty acid, the crystal nucleating agent being contained in an amount of not less than 2.0 mol relative to 100 mol of the water, the defoaming agent and the alkali metal salt of the higher fatty acid being contained in an amount of not less than 0.0025% by weight relative to 100% by weight of the cold storage material composition.

With the above configuration, the cold storage material composition in accordance with an embodiment of the present invention has the advantage of being excellent in melting temperature and stability of the melting temperature. Note that the "melting temperature and stability of the melting temperature" of the cold storage material composition will be detailed later. The cold storage material composition which is in accordance with a preferable embodiment of the present invention and which is excellent in melting temperature and stability of the melting temperature can be said to be a cold storage material composition that has an excellent temperature keeping property and a long duration of a fixed-temperature maintaining state, i.e., has fixed-temperature retention. Therefore, the cold storage material composition in accordance with a preferable embodiment of the present invention also has the advantage of being usable as a substitute material for dry ice. The "fixed-temperature retention", the "temperature keeping property" and the "duration" will be detailed later.

In the present specification, the "cold storage material composition in accordance with an embodiment of the present invention" may also be referred to simply as "the present cold storage material composition".

The present cold storage material composition is usable as a cold storage material of a latent heat type since the cold storage material composition absorbs thermal energy during a phase transition from a solidified state (solid) to a molten state (liquid) (in other words, during melting). Therefore, the present cold storage material composition can also be regarded as a "melt-type latent heat cold storage material composition". The molten state also encompasses a "gel-like form" (described later).

The types and amounts of ions contained in the present cold storage material composition are intended to mean the types and amounts of the ions present in the present cold storage material composition in a state of having room temperature (at least not lower than 20°C) and in a liquefied state. The "liquefied state" also encompasses a "gelled state". The "gelled" will be detailed later. The types and amounts of the ions contained in the present cold storage material composition can be measured, for example, at room temperature (e.g., 30°C) with use of an ion chromatography technique. A measurement method can be any publicly-known method. Further, a case is assumed where the cold storage material composition is produced by carrying out only a mixing step of forming a mixture containing specific ions that can dissociate at room temperature, without carrying out a removing step of removing a specific component(s) in the mixture. In such a case, the types and amounts of the ions contained in the obtained cold storage material composition may be determined through theoretical calculation from chemical formulae of specific compounds used in the mixing step and from the amounts of the specific compounds added. The mixing step can be, for example, the following step (1) or (2): the step (1) of mixing water and the specific compounds, which can dissociate at room temperature; or the step (2) of mixing aqueous solutions containing the respective specific compounds, which can dissociate at room temperature. The removing step can be, for example, a step of cooling the mixture to deposit a compound (e.g., salt) in the mixture and removing the deposited compound from the mixture by, for example, filtration. In the present specification, the term "dissociate" is intended to mean "electrolytically dissociate" and "ionize". The terms "dissociate", "electrolytically dissociate", and "ionize" are interchangeable.

The following description will first discuss components of the present cold storage material composition, and will then discuss the physical properties (e.g., melting temperature) of the present cold storage material composition and a method of producing the present cold storage material composition.

### [2-1. Components of cold storage material composition] (Lithium ions and bromide ions)

The present cold storage material composition contains lithium ions and bromide ions. Since the present cold storage material composition has the above configuration, the present cold storage material composition is excellent in melting temperature and stability of the melting temperature. Therefore, it is possible to stably maintain the temperatures of temperature control target articles in various control temperature ranges (maintain the temperatures of the temperature control target articles at a stable melting temperature and for an extended period of time).

The amount of the lithium ions contained in the present cold storage material composition is not particularly limited, but is more preferably 0.1 mol to 20.0 mol, more preferably 1.0 mol to 18.0 mol, more preferably 2.0 mol to 17.0 mol, more preferably 4.0 mol to 16.0 mol, more preferably 6.0 mol to 14.0 mol, more preferably not less than 6.0 mol and less than 14.0 mol, more preferably 8.0 mol to 13.0 mol, more preferably 7.6 mol to 13.0 mol, more preferably 7.6 mol to 12.6 mol, more preferably 8.1 mol to 12.6 mol, more preferably 8.0 mol to 12.5 mol, more preferably 9.0 mol to 12.5 mol, more preferably 9.5 mol to 12.5 mol, more preferably 10.0 mol to 12.5 mol, more preferably 10.5 mol to 12.5 mol, more preferably 11.0 mol to 12.5 mol, even more preferably 11.5 mol to 12.5 mol, and particularly preferably 12.0 mol to 12.5 mol, relative to 100 mol of the water. Note, however, that the lower limit of the amount of the lithium ions contained in the present cold storage material composition may be more than 20.0 mol. In particular, by setting the amount of the lithium ions contained in the present cold storage material composition to 0.1 mol to 20.0 mol relative to 100 mol of the water, the cold storage material composition has the advantage of having a longer duration of a fixed-temperature maintaining state. Moreover, in particular, by setting the amount of the lithium ions contained in the present cold storage material composition to 11.0 mol to 12.5 mol relative to 100 mol of the water, it is possible to provide the cold storage material composition which is particularly excellent in melting temperature and stability of the melting temperature and which is such as to be able to exhibit a lower one of melting temperatures at a high frequency in, for example, a -80°C to 20°C cycle test (described later).

The present cold storage material composition contains, relative to 100 mol of the water, more preferably 0.1 mol to 22.0 mol, more preferably 1.0 mol to 21.0 mol, more preferably 2.0 mol to 20.0 mol, more preferably 4.0 mol to 18.0 mol, more preferably 5.0 mol to 17.0 mol, more preferably 6.0 mol to 16.0 mol, more preferably 7.0 mol to 15.0 mol, more preferably 7.6 mol to 15.0 mol, more preferably 8.0 mol to 15.0 mol, more preferably 8.1 mol to 14.6 mol, more preferably 9.0 mol to 15.0 mol, more preferably 10.0 mol to 15.0 mol, more preferably 11.0 mol to 15.0 mol, more preferably 11.5 mol to 15.0 mol, more preferably 11.5 mol to 14.5 mol, more preferably 11.5 mol to 14.0 mol, more preferably 12.0 mol to 14.0 mol, more preferably 12.5 mol to 14.0 mol, and even more preferably 13.0 mol to 14.0 mol of the bromide ions. Note, however, that the lower limit of the amount of the bromide ions contained in the present cold storage material composition may be more than 22.0 mol. In particular, by setting the amount of the lithium ions contained in the present cold storage material composition to 0.1 mol to 22.0 mol relative to 100 mol of the water, the cold storage material composition has the advantage of having a longer duration of a fixed-temperature maintaining state.

The present cold storage material composition preferably contains 0.1 mol to 20.0 mol of the lithium ions and 0.1 mol to 22.0 mol of the bromide ions, relative to 100 mol of the water, and particularly preferably contains 7.6 mol to 12.6 mol of the lithium ions and 8.1 mol to 14.6 mol of the bromide ions. By controlling the amounts of the lithium ions and the bromide ions contained in the present cold storage material composition to the above respective ranges, it is possible to provide the cold storage material composition that enables the temperatures of temperature control target articles to be stably maintained in lower control temperature ranges, specifically, in various control temperature ranges from -75.0°C to -66.0°C (maintained at a stable melting temperature and for an extended period of time).

In the present cold storage material composition, the molar quantity of the bromide ions is preferably 0.005 times to 100 times, more preferably 0.01 times to 50 times, more preferably 0.05 times to 20.0 times, more preferably 0.08 times to 10.0 times, more preferably 0.1 times to 9.0 times, more preferably 0.2 times to 8.0 times, more preferably 0.3 times to 7.0 times, more preferably 0.4 times to 6.5 times, more preferably 0.5 times to 6.0 times, more preferably 0.6 times to 6.0 times, more preferably 0.7 times to 6.0 times, more preferably 1.0 time to 6.0 times, more preferably 2.0 times to 6.0 times, even more preferably 3.0 times to 6.0 times, and particularly preferably 3.5 times to 6.0 times greater than the molar quantity of the lithium ions. Note that, in the present cold storage material composition, the molar quantity of the bromide ions may be not more than 5.0 times, not more than 4.0 times, not more than 3.0 times, not more than 2.0 times, not more than 1.5 times, or not more than 1.2 times greater than the molar quantity of the lithium ions. With the above configuration, the cold storage material composition to be obtained has the advantage of having a longer duration of a fixed-temperature maintaining state.

The total amount of the lithium ions and the bromide ions contained in the present cold storage material composition may be 0.1 mol to 42.0 mol, and is preferably 15.7 mol to 27.2 mol, more preferably 15.7 mol to 26.5 mol, more preferably 15.7 mol to 26.0 mol, more preferably 15.7 mol to 25.7 mol, more preferably 16.3 mol to 25.7 mol, more preferably 16.9 mol to 25.7 mol, more preferably 16.9 mol to 25.0 mol, more preferably 16.9 mol to 24.3 mol, more preferably 17.2 mol to 25.5 mol, even more preferably 17.7 mol to 24.0 mol, and particularly preferably 18.2 mol to 23.5 mol, relative to 100 mol of the water. With the above configuration, the cold storage material composition to be obtained has the advantage of having a longer duration of a fixed-temperature maintaining state.

In the present cold storage material composition, an original form(s) of the lithium ions (in other words, what the lithium ions are derived from) is/are not particularly limited. Examples of the original form(s) of the lithium ions include lithium salts such as lithium fluoride, lithium chloride, lithium bromide, lithium iodide, lithium oxide, lithium sulfide, lithium nitride, lithium phosphide, lithium phosphate, lithium carbide, lithium carbonate, lithium nitrate, lithium molybdate, and lithium boride. These lithium salts may be used individually or in combination. The lithium ions contained in the present cold storage material composition are preferably derived from lithium bromide and/or lithium chloride, given, for example, (a) that the compounds have excellent easy handling and safety, (b) that the compounds are inexpensive, and (c) that the cold storage material composition to be obtained has a longer duration of a fixed-temperature maintaining state. The lithium ions contained in the present cold storage material composition are particularly preferably derived from lithium bromide, given that the cold storage material composition to be obtained has excellent easy handling.

Among the above-listed lithium salts, lithium chloride is a substance which is suspected of having reproductive toxicity, and is a substance which needs to be handled with care. In a case where a large amount of lithium chloride is used as a donor of the lithium ions in the present cold storage material composition, toxicity (chemical risk) is increased, and the cold storage material composition may be more difficult to handle. Therefore, from the viewpoint of improving the easy handling (low toxicity) of the cold storage material composition, no lithium chloride is used as the donor of the lithium ions contained in the present cold storage material composition. Alternatively, it is preferable to restrict the amount of lithium chloride used (contained) to a small amount (for example, preferably not more than 10.0 mol, more preferably not more than 5.0 mol, and particularly preferably not more than 1.0 mol, relative to 100 mol of the water).

In the present specification, the cold storage material composition that "has excellent easy handling" is intended to mean a cold storage material composition that has a chemical risk of a certain value or less as a result of carrying out a chemical substance risk assessment evaluation in accordance with the Industrial Safety and Health Act in Japan.

In the present cold storage material composition, an original form(s) of the bromide ions (in other words, what the bromide ions are derived from) is/are not particularly limited. Examples of the original form(s) of the bromide ions include (a) bromide salts such as ammonium bromide, potassium bromide, sodium bromide, lithium bromide, magnesium bromide, and zinc bromide, and (b) hydrobromic acids. These bromide salts may be used individually or in combination. Given, for example, that the cold storage material composition to be obtained has a longer duration of a fixed-temperature maintaining state, in the present cold storage material composition, the bromide ions are preferably derived from lithium bromide and/or sodium bromide, and particularly preferably derived from lithium bromide. Sodium bromide also has the advantage of, as a compound, having excellent easy handling and safety. Furthermore, the bromide ions may be derived from ammonium bromide and/or potassium bromide, given, for example, that the compounds have excellent easy handling and safety. Note that, among the above-listed bromide salts, sodium bromide can function as a crystal nucleating agent (described later).

The present cold storage material composition preferably further contains chloride ions. As compared with the cold storage material composition that contains no chloride ions, the cold storage material composition that further contains chloride ions has (a) the advantage that a period of time from the start of cooling to the start of solidification (hereinafter may be referred to as "time related to the start of solidification") of the cold storage material composition is shortened and/or (b) the advantage that the solidification start temperature of the cold storage material composition is not too low (a difference between the solidification start temperature and the melting temperature is small). As compared with the cold storage material composition that contains no chloride ions, the present cold storage material composition that further contains chloride ions also has the advantage that the melting temperature is further reduced.

In a case where the present cold storage material composition further contains chloride ions, the cold storage material composition contains, relative to 100 mol of the water, preferably 0.1 mol to 20.0 mol, more preferably 0.3 mol to 18.0 mol, more preferably 0.5 mol to 16.0 mol, more preferably 0.8 mol to 14.0 mol, more preferably 1.0 mol to 12.0 mol, more preferably 1.3 mol to 10.0 mol, more preferably 1.5 mol to 8.0 mol, even more preferably 1.5 mol to 7.0 mol, and particularly preferably 1.5 mol to 6.0 mol of the chloride ions. In the present cold storage material composition, the upper limit of the chloride ions may be not more than 5.0 mol, not more than 4.0 mol, or not more than 3.0 mol, relative to 100 mol of the water. With the above configuration, the cold storage material composition to be obtained has (a) the advantage that the time related to the start of solidification of the cold storage material composition is further shortened and/or (b) the advantage that the difference between the solidification start temperature and the melting temperature of the cold storage material composition is smaller.

In a case where the present cold storage material composition further contains chloride ions, the molar quantity of the bromide ions is preferably greater than the molar quantity of the chloride ions in the present cold storage material composition. With the above configuration, the cold storage material composition has the advantage of having a longer duration of a fixed-temperature maintaining state.

In a case where the present cold storage material composition further contains chloride ions, the molar quantity of the bromide ions is preferably not less than 0.1 times, more preferably not less than 0.5 times, more preferably not less than 1.0 time, more preferably not less than 1.5 times, even more preferably not less than 2.0 times, and particularly preferably not less than 2.5 times greater than the molar quantity of the chloride ions in the present cold storage material composition. With the above configuration, the cold storage material composition has the advantage of having excellent fixed-temperature retention.

In the present cold storage material composition, an original form(s) of the chloride ions (in other words, what the chloride ions are derived from) is/are not particularly limited. Examples of the original form(s) of the chloride ions include chloride salts such as sodium chloride, ammonium chloride, lithium chloride, potassium chloride, magnesium chloride, zinc chloride, strontium chloride, and aluminum chloride. These chloride salts may be used individually or in combination. Note that, among the above-listed chloride salts, sodium chloride can function as a crystal nucleating agent (described later).

### (Crystal nucleating agent)

The present cold storage material composition further contains a crystal nucleating agent. The present cold storage material composition which contains the crystal nucleating agent also has, in addition to (a) the effect that it is possible to provide the cold storage material composition that is excellent in melting temperature and stability of the melting temperature, the effect being derived from a given configuration of the present cold storage material composition, (b) the advantage that time related to the start of solidification of the cold storage material composition is shortened and/or (c) the effect that the solidification start temperature of the cold storage material composition is not too low (the difference between the solidification start temperature and the melting temperature is small), the effect being derived from the crystal nucleating agent. Note that, in the present specification, a compound that has the effect of shortening the time related to the start of solidification of the cold storage material composition and/or increasing the solidification start temperature of the cold storage material composition (reducing the difference between the solidification start temperature and the melting temperature) is referred to as a crystal nucleating agent.

The crystal nucleating agent is not particularly limited, and any publicly-known crystal nucleating agent can be used. Examples of the crystal nucleating agent include sodium chloride, sodium bromide, ammonium chloride, calcium carbonate, calcium silicate, ammonium chloride, sodium tetraborate, and magnesium chloride. These crystal nucleating agents may be used individually or in combination. Among these crystal nucleating agents, sodium chloride and sodium bromide are preferable, given that (a) the effect of shortening the time related to the start of solidification of the cold storage material composition and the effect of increasing the solidification start temperature of the cold storage material composition are great and/or (b) it is possible to improve the freezing stability of the cold storage material composition. In other words, the present cold storage material composition preferably contains at least one of sodium chloride and sodium bromide as the crystal nucleating agent, and more preferably contains both sodium chloride and sodium bromide as the crystal nucleating agent. Further, in a case where the present cold storage material composition contains sodium chloride and sodium bromide as the crystal nucleating agent, the amount (number of moles) of the sodium chloride contained is preferably greater than the amount (number of moles) of the sodium bromide contained, from the viewpoint of further lowering the melting temperature of the cold storage material composition.

There is a case where a compound used as the crystal nucleating agent dissociates in the cold storage material composition in a liquefied state to be present as ions. In this case, the amount of the ions derived from the crystal nucleating agent is also incorporated into the amount of the ions contained in the cold storage material composition. For example, in a case where sodium chloride and/or sodium bromide is/are used as the crystal nucleating agent, the sodium chloride is present as chloride ions and sodium ions in the cold storage material composition in a liquefied state and the sodium bromide is present as bromide ions and sodium ions in the cold storage material composition in a liquefied state, because the sodium chloride and the sodium bromide each dissociate in the cold storage material composition in a liquefied state. The amount(s) of such chloride ions and/or bromide ions derived from the sodium chloride and/or the sodium bromide, each of which is the crystal nucleating agent, is/are also incorporated into the amounts of the chloride ions and the bromide ions in the cold storage material composition.

The amount of the crystal nucleating agent contained in the present cold storage material composition is not less than 2.0 mol, preferably not less than 2.5 mol, more preferably not less than 3.0 mol, and even more preferably not less than 3.5 mol, and may be not less than 4.0 mol. The upper limit of the amount of the crystal nucleating agent contained in the cold storage material composition is not particularly limited, and can be, for example, not more than 10.0 mol relative to 100 mol of the water. In particular, by setting the amount of the crystal nucleating agent contained in the present cold storage material composition to not less than 3.5 mol relative to 100 mol of the water, it is possible to provide the cold storage material composition which is particularly excellent in melting temperature and stability of the melting temperature and which is such as to be able to exhibit a lower one of melting temperatures at a high frequency in, for example, the -80°C to 20°C cycle test (described later). In addition, the cold storage material composition which has the above configuration can also have a plurality of advantages including (a) the advantage that the time related to the start of solidification of the cold storage material composition is further shortened, (b) the advantage that the difference between the solidification start temperature and the melting temperature of the cold storage material composition is smaller, (c) the advantage that the solidification start temperature is stabilized, so that the cold storage material composition can be solidified at a constant temperature with good reproducibility, and/or (d) the advantage that the cold storage material composition has excellent freezing stability.

As described above, the crystal nucleating agent may be present in an ionized state in the present cold storage material composition. The amount of the crystal nucleating agent contained in the present cold storage material composition is intended to mean the amount of the crystal nucleating agent which is not ionized in this manner. Therefore, the amount of the crystal nucleating agent contained in the present cold storage material composition can be said to be the amount of the crystal nucleating agent used or blended when the present cold storage material composition is produced.

### (Defoaming agent or alkali metal salt of higher fatty acid)

The present cold storage material composition contains a defoaming agent and/or an alkali metal salt of a higher fatty acid. The present cold storage material composition may contain only one of the defoaming agent and the alkali metal salt of the higher fatty acid, or may contain both the defoaming agent and the alkali metal salt of the higher fatty acid.

The total amount of the defoaming agent and the alkali metal salt of the higher fatty acid contained in the present cold storage material composition is not less than 0.0025% by weight and preferably not less than 0.005% by weight, and may be not less than 0.01% by weight, not less than 0.1% by weight, or not less than 0.2% by weight, relative to 100% by weight of the present cold storage material composition. The above configuration makes it possible to provide the cold storage material composition that is excellent in melting temperature and stability of the melting temperature. The upper limit of the total amount of the defoaming agent and the alkali metal salt of the higher fatty acid contained in the present cold storage material composition is not particularly limited, but can be, for example, not more than 1.0% by weight and preferably not more than 0.5% by weight. Note that the "total amount of the defoaming agent and the alkali metal salt of the higher fatty acid" contained in the present cold storage material composition is the total amount of the defoaming agent and the alkali metal salt of the higher fatty acid, in a case where the present cold storage material composition contains both the defoaming agent and the alkali metal salt of the higher fatty acid. In a case where the present cold storage material composition contains only one of the defoaming agent and the alkali metal salt of the higher fatty acid, the "total amount of the defoaming agent and the alkali metal salt of the higher fatty acid" contained in the present cold storage material composition is the amount of the one of the defoaming agent and the alkali metal salt of the higher fatty acid which one is contained in the present cold storage material composition.

### (Defoaming agent)

In the present specification, the defoaming agent is intended to mean a substance having an action of preventing a liquid (including a gel) from foaming (preventing foam (air bubbles) from being generated in the liquid), by being added to the liquid and then reducing the surface tension of the liquid and/or reducing the viscosity of the liquid.

Examples of the defoaming agent include compounds such as: higher alcohols such as stearyl alcohol, arachidyl alcohol, and behenyl alcohol; higher alcohol derivatives such as polyoxyalkylene alkyl ether, polyglycol derivatives, and polyoxyalkylene glycol; waxes such as paraffin wax, microcrystalline wax, and petrolatum; emulsifying agents such as polyethylene glycol (PEG), glycerine fatty acid ester, sorbitan fatty acid ester, propylene glycol fatty acid ester, and sucrose fatty acid ester; fatty acid derivatives such as polyoxyalkylene fatty acid ester, fatty acid alkylamide, and polyoxyalkylene glycol fatty acid ester; mineral oils; metal soaps (polyvalent metal salts of higher fatty acids) made of higher fatty acids, such as stearic acid, lauric acid, ricinoleic acid, and octylic acid, and metals other than alkali metal, such as magnesium, calcium, barium, and zinc; silicones such as dimethyl silicone oil, methylphenyl silicone oil, and methyl hydrogen silicone oil and modified silicones such as amino-modified silicones, epoxy-modified silicones, carboxymodified silicones, carbinol-modified silicones, methacrylmodified silicones, phenol-modified silicones, polyethermodified silicones, alkyl-modified silicones, higher fatty acid ester-modified silicones; and silica and modified-silica. Note that, in the present specification, these compounds each of which can be used as the defoaming agent may be referred to as defoaming agent components.

As the defoaming agent in the present cold storage material composition, it is preferable to use a defoaming agent composition containing one or more, preferably two or more defoaming agent components. In other words, as the defoaming agent, it is preferable to use a defoaming agent composition containing, in addition to one or more, preferably two or more defoaming agent components, a component(s) other than the defoaming agent components, such as water and/or an organic solvent. Such defoaming agent compositions can be classified into several types according to defoaming agent components contained in the defoaming agent compositions. Thus, the defoaming agent compositions includes: emulsion-type defoaming agents each containing an emulsifying agent and a higher alcohol or a higher alcohol derivative; surfactant-type (self-emulsifying) defoaming agents each containing (a) a higher alcohol derivative, (b) a mixture of a higher alcohol derivative and a fatty acid derivative, or (c) a mixture of a higher alcohol derivative, a mineral oil, and silica; silicone-type defoaming agents each containing a silicone and an emulsifying agent; oil-type defoaming agents which are each a composition obtained by dispersing, in a fatty acid derivative, a mineral oil, or the like, (a) a mixture of a fatty acid derivative and a metal soap, (b) a mixture of a fatty acid derivative, a metal soap, and a higher alcohol derivative, (c) a mixture of a metal soap and a higher alcohol derivative, (d) a fatty acid derivative, or the like; and defoaming agents each of which contains a special silicone and an emulsifying agent and which also serves as a wetting agent (a wetting and defoaming agent). Among these types of defoaming agent compositions, the oil-type defoaming agents are preferable, because it is possible to provide the cold storage material composition which is particularly excellent in melting temperature and stability of the melting temperature and which is such as to be able to exhibit a lower one of melting temperatures at a high frequency in, for example, the -80°C to 20°C cycle test (described later).

As the defoaming agent, a commercially available defoaming agent composition can also be used. Examples of commercially available emulsion-type defoaming agents include Bisfoam TDI-10 (defoaming agent components: a mixture of a higher alcohol and an emulsifying agent) and Bisfoam TMR-10 (defoaming agent components: a mixture of a higher alcohol derivative and an emulsifying agent) each available from Nissin Kagaku Kenkyusho Co., Ltd. Examples of commercially available surfactant(self-emulsifying)-type defoaming agents include Bisfoam ECC (defoaming agent component: a higher alcohol derivative), Bisfoam EB (defoaming agent component: a higher alcohol derivative), Bisfoam ASV (defoaming agent components: polyoxyalkylene alkyl ether and a polyoxyalkylene fatty acid ester), and Bisfoam S-25 (defoaming agent components: a polyglycol derivative, a mineral oil, and silica) each available from Nissin Kagaku Kenkyusho Co., Ltd. Examples of commercially available silicone-type defoaming agents include Bisfoam GC-85 (defoaming agent components: a silicone and an emulsifying agent), Bisfoam GC-214 (defoaming agent components: a silicone and an emulsifying agent), and Bisfoam GC-450 (defoaming agent components: a silicone and an emulsifying agent). Examples of commercially available oil-type defoaming agents include Bisfoam SS-2 (a mineral oil, a polyoxyalkylene fatty acid ester, and a metal soap), Bisfoam K-301 (defoaming agent components: a mixture of a mineral oil, a polyoxyalkylene fatty acid ester, a metal soap, and polyoxyalkylene alkyl ether), Bisfoam DQ-3 (defoaming agent components: a mineral oil, a metal soap, and polyoxyalkylene alkyl ether), and Bisfoam DP (defoaming agent component: a polyoxyalkylene fatty acid ester), each available from Nissin Kagaku Kenkyusho Co., Ltd. Examples of commercially available wetting and defoaming agents include NS wet 85 (defoaming agent components: a special silicone and an emulsifying agent) available from Nissin Kagaku Kenkyusho Co., Ltd.

In a case where the present cold storage material composition contains a defoaming agent composition as the defoaming agent, the amount of the defoaming agent (in other words, the amount of the defoaming agent composition) contained in the present cold storage material composition is preferably not less than 0.0025% by weight and preferably not less than 0.005% by weight, and may be not less than 0.025% by weight, not less than 0.05% by weight, not less than 0.01% by weight, not less than 0.1% by weight, or not less than 0.2% by weight, relative to 100% by weight of the present cold storage material composition. The above configuration makes it possible to provide the cold storage material composition that is excellent in melting temperature and stability of the melting temperature. The upper limit of the amount of the defoaming agent composition contained in the present cold storage material composition is not particularly limited, but can be, for example, not more than 1.0% by weight and preferably not more than 0.5% by weight.

Note that, as a reason for improvement in melting temperature and stability of the melting temperature of the present cold storage material composition that contains the defoaming agent, which has not been conventionally known to contribute to stabilization of the melting temperature of a cold storage material composition, the inventors of the present invention infers as follows: the defoaming agent decreases the surface tension of the cold storage material composition in a liquid state, so that crystal nucleation is stably and rapidly carried out in a higher temperature range and, consequently, freezing behavior of the cold storage material composition is stabilized. Note, however, that the present invention is not limited to such an inference.

### (Alkali metal salt of higher fatty acid)

In the present specification, the alkali metal salt of the higher fatty acid is intended to mean a salt of a higher fatty acid such as stearic acid, lauric acid, ricinoleic acid, and octylic acid and an alkali metal such as lithium, sodium, and potassium.

The alkali metal salt of the higher fatty acid that can be contained in the present cold storage material composition is preferably water-soluble, because such an alkali metal salt of the higher fatty acid has the advantage of being able to be dissolved uniformly in an aqueous solution of the present cold storage material composition. Examples of such a water-soluble alkali metal salt of the higher fatty acid include sodium stearate, sodium laurate, potassium stearate, and potassium laurate.

In a case where the present cold storage material composition contains the alkali metal salt of the higher fatty acid, the amount of the alkali metal salt of the higher fatty acid contained in the present cold storage material composition is preferably not less than 0.0025% by weight and preferably not less than 0.005% by weight, and may be not less than 0.01% by weight, relative to 100% by weight of the present cold storage material composition. The above configuration makes it possible to provide the cold storage material composition which has a solidification start temperature that is not too low (in other words, the difference between the solidification start temperature and the melting temperature is small), in addition to being excellent in melting temperature and stability of the melting temperature. The upper limit of the amount of the alkali metal salt of the higher fatty acid contained in the present cold storage material composition is not particularly limited, but can be, for example, not more than 1.0% by weight and preferably not more than 0.5% by weight, and may be not more than 0.1% by weight.

### (Water)

The water in the present cold storage material composition is not particularly limited and may be, for example, water usable as drinking water, such as tap water. More specifically, the water may be any of soft water, hard water, pure water, and the like.

### (Thickener)

The present cold storage material composition preferably further contains a thickener. In an embodiment of the present invention, the present cold storage material composition is, as described later, charged into a container, a bag, or the like, so that a cold storage material is formed. The cold storage material can be used while being placed in a transport container. However, in a case where the container or the like with which the cold storage material is formed breaks during transportation or conveyance of the cold storage material, the cold storage material composition charged in the container or the like leaks out of the broken container or the like. In such a case, there is a concern that, for example, the leaking cold storage material composition contaminates a temperature control target article and makes the temperature control target article unusable.

In a case where the present cold storage material composition contains the thickener, the cold storage material composition is gelled in an environment at a temperature higher than or equal to the melting temperature of the cold storage material composition. This makes it possible to reduce the flowability of the cold storage material composition. Therefore, even in a case where the container or the like charged with the cold storage material composition breaks during transportation or conveyance as described above, it is possible to minimize an outflow of the cold storage material composition.

The thickener that can be contained in the present cold storage material composition is not particularly limited, and examples of the thickener include water-absorbing resins (such as starch-based water-absorbing resins, acrylatebased water-absorbing resins, poval-based water-absorbing resins, and carboxymethyl cellulose-based water-absorbing resins), attapulgite clay, gelatin, agar, silica gel, xanthan gum, gum arabic, guar gum, carrageenan, cellulose, and konjac.

The thickener may be an ionic thickener or a nonionic thickener. It is preferable to select a nonionic thickener that does not affect the ions contained in the cold storage material composition. Examples of the nonionic thickener include guar gum, dextrin, polyvinyl pyrrolidone, and hydroxyethyl cellulose. Among these nonionic thickeners, hydroxyethyl cellulose, which has excellent gel stability and which has environmental adaptability, is particularly preferable.

The lithium ions and the bromide ions contained in the present cold storage material composition and the chloride ions optionally contained in the present cold storage material composition may form a salt over time due to a change in temperature, depending on the concentrations of the lithium ions, the bromide ions, and the chloride ions. The formed salt may be deposited. In a case where the present cold storage material composition contains the thickener, the thickener not only causes the cold storage material composition to be in the gel-like form, but also causes the ions dissolved in the cold storage material composition to be efficiently dispersed. This makes it possible to prevent deposition of the salt derived from the ions.

In a case where the present cold storage material composition further contains the thickener, the amount of the thickener contained in the cold storage material composition is not particularly limited. The amount of the thickener contained in the cold storage material composition is, for example, preferably 0.1 mol to 2.0 mol, more preferably 0.3 mol to 1.5 mol, more preferably 0.5 mol to 1.3 mol, more preferably 0.6 mol to 1.2 mol, and even more preferably 0.7 mol to 1.1 mol, relative to 100 mol of the water. The above configuration brings (a) the advantage that, by gelling the cold storage material composition, it is possible to reduce the flowability of the cold storage material composition (prevent a flow of the cold storage material composition) and possible to minimize an outflow of the cold storage material composition even in a case where the container or the like charged with the cold storage material composition breaks during transportation or conveyance and/or (b) the advantage that it is possible to efficiently disperse the ions dissolved in the cold storage material composition and possible to prevent deposition of the salt derived from the ions.

### (Other components)

The amount of calcium ions in the cold storage material composition is not particularly limited, but is preferably smaller. A smaller amount of calcium ions in the cold storage material composition brings the advantage that the melting temperature of the cold storage material composition is stabilized. The amount of the calcium ions in the cold storage material composition is preferably not more than 5.0 mol, more preferably not more than 4.0 mol, more preferably not more than 3.0 mol, more preferably not more than 2.0 mol, more preferably not more than 1.0 mol, even more preferably not more than 0.5 mol, and particularly preferably not more than 0.1 mol, relative to 100 mol of the water. The cold storage material composition most preferably contains no calcium ions. That the cold storage material composition contains no calcium ions is intended to mean that the amount of the calcium ions in the cold storage material composition is not more than 0.1 mol relative to 100 mol of the water.

The amount of ammonium ions in the cold storage material composition is not particularly limited, but is preferably smaller. A smaller amount of ammonium ions in the cold storage material composition brings the advantage that the melting temperature of the cold storage material composition is stabilized. The amount of the ammonium ions in the cold storage material composition is preferably not more than 5.0 mol, more preferably not more than 4.0 mol, more preferably not more than 3.0 mol, more preferably not more than 2.0 mol, more preferably not more than 1.0 mol, even more preferably not more than 0.5 mol, and particularly preferably not more than 0.1 mol, relative to 100 mol of the water. The cold storage material composition most preferably contains no ammonium ions. That the cold storage material composition contains no ammonium ions is intended to mean that the amount of the ammonium ions in the cold storage material composition is not more than 0.1 mol relative to 100 mol of the water.

In an embodiment of the present invention, compounds added to the cold storage material composition are not particularly limited. However, the compounds are preferably in no danger of generating harmful fumes and/or preferably do not have the properties of a strong alkali, a strong acid, and the like. The above configuration brings the advantage of offering easy production and easy handling of the present cold storage material composition. In other words, in the present specification, the phrase "easy handling" is intended to mean that substances (compounds) contained in the cold storage material composition and the cold storage material composition itself are in no danger of generating harmful fumes and/or do not have the properties of a strong alkali, a strong acid, and the like. For example, zinc chloride is in danger of generating harmful fumes, and potassium hydroxide is strongly alkaline. Therefore, it can be said that zinc chloride and potassium hydroxide are compounds that are difficult to handle.

Examples of a combination of the compounds that are mixed with the water in order to produce the present cold storage material composition include the following combinations: (i) lithium bromide; (ii) lithium bromide and lithium chloride; (iii) lithium bromide and sodium chloride; (iv) lithium bromide, lithium chloride, and sodium chloride; (v) lithium bromide and sodium bromide; (vi) lithium bromide, lithium chloride, and sodium bromide; (vii) lithium bromide, sodium chloride, and sodium bromide; (viii) lithium bromide, lithium chloride, sodium chloride, and sodium bromide; (ix) lithium bromide and any chloride salt; (x) lithium bromide and any crystal nucleating agent; (xi) lithium bromide, any chloride salt, and any crystal nucleating agent.

The present cold storage material composition may contain compounds which do not dissociate (are not ionized) at 30°C, such as a lithium salt, a bromide salt, and a chloride salt. In a case where the compounds contained in the present cold storage material composition do not dissociate at 30°C, even when the compounds contain a lithium element, a bromine element, a chlorine element, and the like, the amounts of the compounds contained in the present cold storage material composition do not affect the amounts of the lithium ions contained in the present cold storage material composition, of the bromide ions contained in the present cold storage material composition, and of the chloride ions contained in the present cold storage material composition.

As necessary, the present cold storage material composition can contain, as the other component(s), a supercooling inhibitor, a phase separation inhibitor, a perfume, a colorant, an antibacterial agent, a high molecular polymer, the other organic compound(s), the other inorganic compound(s), and/or the like, in addition to the above components.

The present cold storage material composition in a state of having a temperature higher than or equal to the melting temperature and in a liquefied state may contain the other substance(s) and/or the other ions than the lithium ions, the bromide ions, and the chloride ions. Examples of the other substance(s) include metals such as light metals and heavy metals. Examples of the light metals include aluminum, magnesium, beryllium, and titanium. Examples of the heavy metals include iron, lead, gold, platinum, silver, copper, chromium, cadmium, mercury, zinc, arsenic, manganese, cobalt, nickel, molybdenum, tungsten, tin, bismuth, uranium, and plutonium. Examples of the other ions include metal ions such as light metal ions of the above light metals and heavy metal ions of the above heavy metals.

The materials (compounds, water, and the like) used to produce the present cold storage material composition may include any of the above-listed metals.

### [2-2. Physical properties of cold storage material composition]

### (Melting temperature)

The melting temperature of the present cold storage material composition is not particularly limited, and can be set, as appropriate, in accordance with various control temperatures required for various temperature control target articles. The melting temperature of the present cold storage material composition can be, for example, -75.0°C to - 66.0°C.

Some of various articles such as pharmaceutical products, medical devices, specimens, organs, chemical substances, and foods may require, as control temperatures, temperatures of not higher than -66.0°C during storage or transportation. In order to make it possible to control the temperature of an article for which control of a control temperature in such a particularly low temperature range is required, the melting temperature of the present cold storage material composition is preferably not higher than -66.0°C, and more preferably has the melting temperature in a range of -75.0°C to -66.0°C. Further, storage or transportation of some of the temperature control target articles, i.e., bio drug substance, regenerative cells, vaccines, antibodies, gene therapy vectors, and the like may require, as control temperatures, temperatures of not higher than -68.5°C, preferably not higher than -69.0°C. Thus, from the viewpoint of making it possible to control the temperatures of a wider variety of temperature control target articles, the present cold storage material composition has the melting temperature in a range of preferably -75.0°C to -68.5°C, more preferably -75.0°C to -69.0°C.

In the present specification, the "melting temperature" of the cold storage material composition is intended to mean the "temperature of the cold storage material composition during a period from when the cold storage material composition in a solid state starts melting to when the cold storage material composition turns into a liquefied state". Note that the word "liquefied" encompasses the above-described "gelled". The "melting temperature" will be more specifically discussed with reference to Fig. 1. Fig. 1 is a graph obtained by plotting the temperature of the cold storage material composition in accordance with an embodiment of the present invention versus time in a case where the cold storage material composition in a solidified state was placed in a thermostatic bath and then the temperature of the thermostatic bath was increased from a cryogenic temperature at a constant temperature increase rate. As compared with the temperature of the thermostatic bath which is increased at a constant rate, the temperature of the cold storage material composition changes, as shown in Fig. 1, in the order of the following (1) to (3): (1) the temperature of the cold storage material composition increases at a constant rate or a substantially constant rate from the cryogenic temperature to a certain temperature (regarded as temperature T₁); (2) there is little change from the temperature T₁ to a certain temperature (regarded as temperature T₂) due to latent heat of the cold storage material composition; and (3) the temperature of the cold storage material composition starts increasing again after the temperature T₂. In the present specification, the temperature T₁ is referred to as "melting start temperature", and the temperature T₂ is referred to as "melting end temperature". A midpoint between the temperature T₁ and the temperature T₂, i.e., temperature T₃, is defined as "melting temperature" in the present specification.

Further, regarding the cold storage material composition in accordance with an embodiment of the present invention, a state in which, due to the action of latent heat of the cold storage material composition, the temperature of the cold storage material composition is maintained, from the melting start temperature T₁ to the melting end temperature T₂, in a range from the melting start temperature T₁ to a temperature less than 2.5°C higher than the melting start temperature T₁ and for a certain period of time or longer (e.g., 10 minutes or longer) is defined as "fixed-temperature maintenance". In a case where the cold storage material composition exhibits fixed-temperature maintenance, the cold storage material composition can be said to "have fixed-temperature retention". The present cold storage material composition is a cold storage material composition having fixed-temperature retention. In other words, the present cold storage material composition can be said to be a cold storage material composition which exhibits fixed-temperature maintenance when evaluated in accordance with the above criterion. The cold storage material composition having fixed-temperature retention can also be said to be a cold storage material composition that is excellent in temperature keeping property and duration. Note that a more specific method of evaluating the fixed-temperature retention (and the temperature keeping property and the duration) of the cold storage material composition is as described in Examples.

The melting temperature of the cold storage material composition can be measured by (i) placing a measurement sample in a commercially available thermostatic bath equipped with a temperature control unit, (ii) increasing or decreasing the temperature of the thermostatic bath at a constant rate, and (iii) monitoring the temperature of the sample with use of a thermocouple while the temperature of the thermostatic bath is being increased or decreased.

### (Melting temperature and stability of melting temperature)

The present cold storage material composition is excellent in melting temperature and stability of the melting temperature. The melting temperature and the stability of the melting temperature of the cold storage material composition can be evaluated by subjecting the cold storage material composition to a cycle test in which melting and solidification (freezing) of the cold storage material composition are repeated a plurality of times with an identical temperature profile (may be referred to simply as a "cycle test").

The cycle test is preferably a method having (i) a melting step of heating the cold storage material composition in a frozen state to a temperature sufficiently higher than the melting temperature of the cold storage material composition so as to melt the cold storage material composition and (ii) a solidifying (freezing) step of cooling the cold storage material composition in a melted state (as a result of the melting step) to a temperature lower than the solidifying (freezing) temperature of the cold storage material composition so as to solidify (freezing) the cold storage material composition.

In the cycle test, the above melting step and the above freezing step are successively repeated a plurality of times with an identical temperature profile with respect to the cold storage material composition that is a target. Note, here, that the number of repetitions is not particularly limited, but can be, for example, not less than 10 times, not less than 15 times, not less than 20 times, or the like.

The "temperature sufficiently higher than the melting temperature" in the cycle test is not particularly limited, provided that the temperature is not less than 30°C higher than the melting temperature of the cold storage material composition subjected to the cycle test (the temperature of the melting temperature + not less than 30°C). The temperature can be, for example, a temperature approximately 30°C to 80°C higher than the melting temperature of the cold storage material composition subjected to the cycle test. As an example, the "temperature sufficiently higher than the melting temperature" in the cycle test can be any temperature in a range of -30°C to 20°C. The "temperature lower than the solidifying (freezing) temperature" in the cycle test is not particularly limited, provided that the temperature is lower than the solidifying (freezing) temperature of the cold storage material composition subjected to the cycle test. The temperature can be, for example, a temperature approximately 20°C to 1°C lower than the melting temperature of the cold storage material composition subjected to the cycle test. As an example, the "temperature lower than the melting temperature" in the cycle test can be any temperature in a range of -85°C to -70°C. Note that, in the present specification, the melting temperature and the stability of the melting temperature of the cold storage material composition are evaluated by the cycle test in which 20°C or -30°C is employed as the "temperature sufficiently higher than the melting temperature" and -80°C is employed as the "temperature lower than the solidifying (freezing) temperature" (-80°C to 20°C or -80°C to -30°C cycle test). A specific method of carrying out the -80°C to -30°C cycle test is as described in Examples.

A frequency at which, in the -80°C to -30°C cycle test, the present cold storage material composition exhibits a lower one of two melting temperatures that can be detected (the number of times a lower one of melting temperatures is exhibited among the total number of times cycle tests are carried out / the total number of times cycle tests are carried out) is preferably not less than 20%, more preferably not less than 30%, more preferably not less than 40%, more preferably not less than 50%, more preferably not less than 60%, more preferably not less than 70%, more preferably not less than 80%, even more preferably not less than 90%, and particularly preferably 100%. The cold storage material composition which, in the -80°C to -30°C cycle test, exhibits, at a frequency of not less than 20%, a lower one of two melting temperatures that can be detected can be said to be a cold storage material composition that is excellent in melting temperature and stability of the melting temperature. It can be said that, as the frequency becomes higher, the cold storage material composition is more excellent in melting temperature and stability of the melting temperature.

In pursing diligent studies on the melting temperature and the stability of the melting temperature of a cold storage material composition, the inventors of the present invention uniquely obtained the following findings. That is, behavior of the melting point of a cold storage material composition becomes more unstable, in a case where a change in temperature of the cold storage material composition in a cycle test, i.e., a difference between a temperature sufficiently higher than the melting temperature of the cold storage material composition and a temperature lower than the solidifying (freezing) temperature of the cold storage material composition is made greater. As a result, in a cycle test in which a difference between a temperature sufficiently higher than a melting temperature and a temperature lower than a solidifying (freezing) temperature is made greater, a frequency at which a higher one of two melting temperatures that can be detected is exhibited greatly increases. In other words, a frequency at which a lower one of the melting temperatures is exhibited greatly reduces, and the melting temperature and the stability of the melting temperature of a cold storage material composition decrease.

The present cold storage material composition is not particularly limited, provided that the frequency at which, in the -80°C to -30°C cycle test, the present cold storage material composition exhibits the lower one of two melting temperatures that can be detected is not less than 20%. From the viewpoint of enabling repetitive stable temperature control even under a variety of conditions, the present cold storage material composition is preferably a cold storage material composition that can exhibit an excellent melting temperature and excellent stability of the melting temperature also under more stringent conditions.

In the present specification, evaluation of the stability of the melting temperature of the cold storage material composition under more stringent conditions as described above can be carried out by a cycle test in which 20°C (equivalent to room temperature) is employed as the "temperature sufficiently higher than the melting temperature" and -80°C is employed as the "temperature lower than the solidifying (freezing) temperature" (-80°C to 20°C cycle test). A specific method of carrying out the -80°C to 20°C cycle test is as described in Examples.

A frequency at which, in the -80°C to 20°C cycle test, the present cold storage material composition exhibits a lower one of two melting temperatures that can be detected (the number of times a lower one of melting temperatures is exhibited among the total number of times cycle tests are carried out / the total number of times cycle tests are carried out) is preferably not less than 20%, more preferably not less than 30%, more preferably not less than 40%, more preferably not less than 50%, more preferably not less than 60%, more preferably not less than 70%, more preferably not less than 80%, even more preferably not less than 90%, and particularly preferably 100%. The cold storage material composition which, in the -80°C to 20°C cycle test, exhibits, at a higher frequency, a lower one of two melting temperatures that can be detected can be said to be particularly excellent in melting temperature and stability of the melting temperature.

The inventors of the present invention conducted diligent studies in order to improve the melting temperature and the stability of the melting temperature of a cold storage material composition also under more stringent conditions. As a result, the inventors of the present invention newly obtained the following findings. That is, it is surprisingly possible to improve the melting temperature and the stability of the melting temperature of a cold storage material composition also in the -80°C to 20°C cycle test in which more stringent conditions are assumed, by satisfying any of the following conditions: (condition i) the cold storage material composition is caused to contain a specific type of defoaming agent or alkali metal salt of a higher fatty acid; (condition ii) the cold storage material composition is caused to contain a specific amount of a crystal nucleating agent; and (condition iii) the amount of lithium ions in the cold storage material composition is adjusted to a specific amount. From the viewpoint of providing a cold storage material composition which is particularly excellent in melting temperature and stability of the melting temperature and which is such as to be able to exhibit a lower one of melting temperatures at a high frequency in the -80°C to 20°C cycle test, the present cold storage material composition preferably satisfies, out of the above conditions i to iii, at least one condition, more preferably any two conditions, and particularly preferably all three conditions.

Thus, the cold storage material composition in accordance with a particularly preferable embodiment of the present invention, i.e., the cold storage material composition that is particularly excellent in melting temperature and stability of the melting temperature under conditions of both the -80°C to -30°C cycle test and the -80°C to 20°C cycle test can be expressed, for example, as follows: a cold storage material composition containing water, lithium ions, bromide ions, a crystal nucleating agent, and a defoaming agent, the defoaming agent being an oil-type defoaming agent, the crystal nucleating agent being contained in an amount of not less than 3.5 mol and the lithium ions being contained in an amount of 11.0 mol to 12.5 mol relative to 100 mol of the water, the oil-type defoaming agent being contained in an amount of not less than 0.0025% by weight relative to 100% by weight of the cold storage material composition.

The cold storage material composition in accordance with another particularly preferable embodiment of the present invention, i.e., the cold storage material composition that is particularly excellent in melting temperature and stability of the melting temperature under the conditions of both the -80°C to -30°C cycle test and the -80°C to 20°C cycle test can be expressed, for example, as follows: a cold storage material composition containing water, lithium ions, bromide ions, a crystal nucleating agent, and an alkali metal salt of a higher fatty acid, the crystal nucleating agent being contained in an amount of not less than 3.5 mol and the lithium ions being contained in an amount of 11.0 mol to 12.5 mol relative to 100 mol of the water, the alkali metal salt of the higher fatty acid being contained in an amount of not less than 0.0025% by weight relative to 100% by weight of the cold storage material composition.

Moreover, the cold storage material composition in accordance with another particularly preferable embodiment of the present invention, i.e., the cold storage material composition that is particularly excellent in melting temperature and stability of the melting temperature under the conditions of both the -80°C to -30°C cycle test and the -80°C to 20°C cycle test can also be expressed, for example, as follows: a cold storage material composition containing water, lithium ions, bromide ions, a crystal nucleating agent, a defoaming agent, and an alkali metal salt of a higher fatty acid, the defoaming agent being an oil-type defoaming agent, the crystal nucleating agent being contained in an amount of not less than 3.5 mol and the lithium ions being contained in an amount of 11.0 mol to 12.5 mol relative to 100 mol of the water, the defoaming agent and the alkali metal salt of the higher fatty acid being contained in a total amount of not less than 0.0025% by weight relative to 100% by weight of the cold storage material composition.

### <Freezing stability>

The present cold storage material composition is preferably a cold storage material composition that is excellent in freezing stability.

A cold storage material composition is ordinarily in a molten state (liquid or gel-like form). In order to exhibit fixed-temperature retention, the cold storage material composition needs to be solidified (frozen) by being made in a solidified state, i.e., being stored at a temperature (storage temperature) lower than the melting temperature of the cold storage material composition.

Examples of a method of solidifying a cold storage material composition having a melting temperature at a low temperature (e.g., in a range of -75.0°C to -66.0°C), such as the present cold storage material composition, include a method of using a freezer (deep freezer) capable of controlling the temperature of the cold storage material composition to a temperature lower than the melting temperature.

A control temperature of a freezer commonly widely used (general-purpose freezer), among commercially available deep freezers, is approximately -85°C to approximately -80°C. However, the cold storage material composition is desirably stably frozen even at a temperature of approximately -76°C, in consideration of, for example, the number of years for which the freezer is used, a degree of adhesion of frost, a loading capacity in the freezer, a variation depending on a loading position in the freezer, and/or a product error.

As a deep freezer, a freezer (cryogenic freezer) capable of controlling a temperature to a cryogenic temperature such as a temperature lower than or equal to -120°C is also commercially available. An environment in which such a cryogenic freezer can be introduced and operated is limited from the viewpoint of price, size, and maintenance cost. Thus, a cold storage material composition that requires such a cryogenic freezer instead of a general-purpose freezer so as to be solidified may be limited in environment in which the cold storage material composition can be used, and, consequently limited in application of the cold storage material composition.

Thus, from the viewpoint of providing a cold storage material composition that can be used in a wider environment, and, consequently, can be applied for a wider variety of purposes, the present cold storage material composition is preferably capable of being stably solidified in a general-purpose freezer, in other words, capable of being stably solidified in a temperature range of -76°C to -85°C. In the present specification, such a cold storage material composition that can stably solidified in a temperature range of -76°C to -85°C is referred to as a "cold storage material composition that is excellent in freezing stability". Note that the freezing stability of the cold storage material composition can be measured and evaluated by a method described in Examples.

### [2-3. Method of producing cold storage material composition]

A method of preparing a cold storage material composition in accordance with an embodiment of the present invention is not particularly limited, and can be any publicly-known method. For example, a cold storage material composition can be prepared by a method including the following (I-1) and (I-2): (I-1) (i) lithium bromide or a lithium salt and a bromide salt, (ii) a crystal nucleating agent, (iii) a defoaming agent and/or an alkali metal salt of a higher fatty acid, and, as necessary, (v) a thickener and/or the other component(s) are mixed in advance with use of a tumbler, a ribbon blender, or the like; and (I-2) thereafter, an obtained mixture is transferred to a container, water is poured into the container, and the mixture in the container is stirred with use of a mixer or the like while the container is cooled. A cold storage material composition can also be prepared by a method including the following (II-1) to (II-3): (II-1) (i) an aqueous solution of lithium bromide or an aqueous solution of a lithium salt and an aqueous solution of a bromide salt, (ii) an aqueous solution of a crystal nucleating agent, and, as necessary, (iv) an aqueous solution(s) of the other component(s) are each prepared; (II-2) in a case where a thickener is used, the aqueous solution of the crystal nucleating agent and the thickener are mixed together to prepare the aqueous solution of the crystal nucleating agent in which aqueous solution the thickener is dispersed; and (II-3) (i) the aqueous solution of the lithium bromide or the aqueous solution of the lithium salt and the aqueous solution of the bromide salt, (ii) a defoaming agent and/or an alkali metal salt of a higher fatty acid, and, as necessary, (iii) the aqueous solution(s) containing the other component(s) are mixed with the aqueous solution of the crystal nucleating agent (in which aqueous solution the thickener is dispersed). Moreover, a cold storage material composition can also be prepared by a method including the following (III-1) to (III-3): (III-1) an aqueous solution containing (i) lithium bromide or a lithium salt and a bromide salt, (ii) a crystal nucleating agent, (iii) a defoaming agent and/or an alkali metal salt of a higher fatty acid, and, as necessary, (iv) the other component(s) is prepared; (III-2) in a case where a thickener is used, water and the thickener are mixed together to prepare an aqueous solution in which the thickener is dispersed; and (III-3) the aqueous solution containing (i) the lithium bromide or the lithium salt and the bromide salt, (ii) the crystal nucleating agent, (iii) the defoaming agent and/or the alkali metal salt of the higher fatty acid, and, as necessary, (iv) the other component(s) and the aqueous solution in which the thickener is dispersed are mixed together. Furthermore, a cold storage material composition can also be prepared by a method including the following (IV-1) to (IV-3): (IV-1) an aqueous solution containing (i) lithium bromide or a lithium salt and a bromide salt, (ii) a defoaming agent and/or an alkali metal salt of a higher fatty acid, and, as necessary, (iii) the other component(s) and an aqueous solution containing a crystal nucleating agent are each prepared; (IV-2) in a case where a thickener is used, the aqueous solution of the crystal nucleating agent and the thickener are mixed together to prepare the aqueous solution of the crystal nucleating agent in which aqueous solution the thickener is dispersed; and (IV-3) the aqueous solution containing (i) the aqueous solution of the lithium bromide or the lithium salt and the bromide salt, (ii) the defoaming agent and/or the alkali metal salt of the higher fatty acid, and, as necessary, (ii) the other component(s) and the aqueous solution of the crystal nucleating agent in which aqueous solution the thickener is dispersed are mixed together.

Specific examples of the method of producing a cold storage material composition in accordance with an embodiment of the present invention include the following aspects.
[A] A method of (a) mixing (i) water, (ii) lithium bromide, (iii) a defoaming agent and/or an alkali metal salt of a higher fatty acid, and, as necessary, (iv) the other component(s) and (b) further mixing, with an obtained mixture, sodium chloride that serves as a crystal nucleating agent and, as necessary, a thickener and/or the like.
[B] A method of (a) mixing (i) water, (ii) lithium bromide and lithium chloride, (iii) a defoaming agent and/or an alkali metal salt of a higher fatty acid, and, as necessary, (iv) the other component(s) and (b) further mixing, with an obtained mixture, a crystal nucleating agent and, as necessary, a thickener and/or the like.
[C] A method of (a) mixing (i) water, (ii) lithium bromide, (iii) a defoaming agent and/or an alkali metal salt of a higher fatty acid, and, as necessary, (iv) the other component(s) and (b) further mixing, with an obtained mixture, sodium bromide that serves as a crystal nucleating agent and, as necessary, a thickener and/or the like.
[D] A method of (a) mixing (i) water, (ii) lithium bromide and lithium chloride, (iii) a defoaming agent and/or an alkali metal salt of a higher fatty acid, and, as necessary, (iv) the other component(s) and (b) further mixing, with an obtained mixture, sodium bromide that serves as a crystal nucleating agent and, as necessary, a thickener and/or the like.
[E] A method of (a) mixing (i) water, (ii) lithium bromide, (iii) a defoaming agent and/or an alkali metal salt of a higher fatty acid, and, as necessary, (iv) the other component(s) and (b) further mixing, with an obtained mixture, sodium chloride and sodium bromide that serve as a crystal nucleating agent and, as necessary, a thickener and/or the like.
[F] A method of (a) mixing (i) water, (ii) lithium bromide, (iii) lithium chloride, (iv) a defoaming agent and/or an alkali metal salt of a higher fatty acid, and, as necessary, (v) the other component(s) and (b) further mixing, with an obtained mixture, sodium chloride and sodium bromide that serve as a crystal nucleating agent and, as necessary, a thickener and/or the like.

In the above [A] to [F], the amount(s) of the lithium bromide, the lithium chloride, the sodium chloride, and/or the sodium bromide used can be set as appropriate so that the amounts of lithium ions, bromide ions, and chloride ions in a cold storage material composition to be obtained become desired amounts.

Next, the following description will discuss the "cold storage material".

### [3. Cold storage material]

A cold storage material in accordance with an embodiment of the present invention need only include the above-described cold storage material composition. The other configurations, materials, and the like of the cold storage material are not limited.

The cold storage material in accordance with an embodiment of the present invention is usable as a cold storage material of a latent heat type since the cold storage material composition which forms the cold storage material absorbs thermal energy in undergoing a phase transition from a solidified state (solid) to a molten state (liquid) (in other words, in melting). The cold storage material in accordance with an embodiment of the present invention can also be regarded as a melt-type latent heat cold storage material. Note that the molten state encompasses the above-described "gel-like form".

The cold storage material in accordance with an embodiment of the present invention can be obtained by, for example, charging the above-described cold storage material composition into a container, a bag, or the like.

The container or the bag is preferably made mainly of resin (e.g., synthetic resin) in order to prevent the cold storage material composition from leaking out due to rusting and corrosion caused by the cold storage material composition. In other words, the cold storage material in accordance with an embodiment of the present invention contains the above-described cold storage material composition in accordance with an embodiment of the present invention and resin.

Examples of the resin include polyvinyl chloride, polyethylene, polypropylene, polyethylene terephthalate, polystyrene, nylon, and polyester.

One of these materials may be used alone. Alternatively, two or more of the materials can be used in combination (e.g., by taking on a multilayer structure) in order to improve thermal resistance and barrier performance. From the viewpoint of handling and cost, the container or the bag is preferably made of polyethylene.

The shape of the container or the bag is not particularly limited. However, from the viewpoint of efficiently exchanging heat between the cold storage material composition and a temperature control target article or a space around the temperature control target article via the container or the bag, the container or the bag preferably has a shape that has a small thickness and that makes it possible to achieve a large surface area. The cold storage material can be formed by charging such a container or such a bag with the cold storage material composition.

Note that more specific examples of the container or the bag include a container and a bag disclosed in Japanese Patent Application Publication Tokukai No. 2015-78307, which is incorporated herein by reference.

The melting temperature of the cold storage material in accordance with an embodiment of the present invention can be regarded as being identical to the melting temperature of the cold storage material composition which the cold storage material includes.

Next, the following description will discuss the "transport container".

### [4. Transport container]

A transport container in accordance with an embodiment of the present invention need only include the above-described cold storage material in accordance with an embodiment of the present invention. The other specific configurations, materials, and the like of the transport container are not particularly limited.

Fig. 2 illustrates an example of the transport container in accordance with an embodiment of the present invention. 201 of Fig. 2 is a perspective view schematically illustrating a cold storage material 10 in accordance with an embodiment of the present invention. 202 of Fig. 2 is an exploded perspective view schematically illustrating a transport container 1 in accordance with an embodiment of the present invention.

As illustrated in 201 and 202 of Fig. 2, an opening of the cold storage material 10 in accordance with the present embodiment is closed by a cap 11 of the cold storage material. A cold storage material composition 20 in accordance with an embodiment of the present invention is charged in the cold storage material 10 through the opening. The cold storage material 10 can be used while being housed or placed in a thermal insulation container 40. In other words, the transport container in accordance with an embodiment of the present invention includes the above-described cold storage material in accordance with an embodiment of the present invention and a thermal insulation container.

A material of the cold storage material 10 and a material of the cap 11 for the cold storage material are not particularly limited, and any conventionally known materials can be used as appropriate.

By including, for example, a box 41 and a lid 42 which is fitted into an opening 410 of the box, the thermal insulation container 40 is configured to have a thermal insulation property.

A material of the thermal insulation container 40 is not particularly limited, provided that the material of the thermal insulation container 40 has a thermal insulation property. As the material of the thermal insulation container 40, a foamed plastic is suitably used because the foamed plastic is lightweight and inexpensive and can prevent dew condensation. As the material of the thermal insulation container 40, a vacuum thermal insulation material is also suitably used because the vacuum thermal insulation material has an excellent thermal insulation property, maintains a temperature for an extended period of time, and can prevent dew condensation. Specific examples of the foamed plastic include foamed polyurethane, foamed polystyrene, foamed polyethylene, foamed polypropylene, foamed AS resin, and foamed ABS resin. Examples of the vacuum thermal insulation material include vacuum thermal insulation materials whose cores are made of silica powder, glass wool, glass fiber, or the like. The thermal insulation container 40 may be constituted by a combination of the foamed plastic and the vacuum thermal insulation material. In such a case, the thermal insulation container 40 having high thermal insulation performance can be obtained by, for example, (i) covering, with the vacuum thermal insulation material, an outer surface or an inner surface of each of the box 41 and the lid 42 that are made of the foamed plastic, or (ii) embedding the vacuum thermal insulation material in walls constituting each of the box 41 and the lid 42 that are made of the foamed plastic.

301 of Fig. 3 is a perspective view schematically illustrating the inside of the transport container 1. 302 of Fig. 3 is a cross-sectional view schematically illustrating a cross-section taken along the line A-A in 301 of Fig. 3.

As illustrated in 202 of Fig. 2, the thermal insulation container 40 includes the box 41 and the lid 42, and the transport container 1 in accordance with an embodiment of the present invention includes the thermal insulation container 40, cold storage materials 10, and spacers 6. In other words, the transport container in accordance with an embodiment of the present invention includes the above-described cold storage material in accordance with an embodiment of the present invention, a thermal insulation container, and spacers. As illustrated in Figs. 2 and 3, in a case where the cold storage materials 10 are housed or placed in the transport container 1, the transport container 1 in accordance with an embodiment of the present invention can include the spacers 6 in order to (1) fill a space between (a) a surface of the lid 42 which covers a space in the box, lateral surfaces 412 of the box, and a bottom surface 411 of the box and (b) the cold storage materials 10 and (2) secure a space 5 for accommodating a temperature control target article as illustrated in 302 of Fig. 3.

Although the transport container 1 includes 10 cold storage materials 10 in Figs. 2 and 3, the number of cold storage materials included in the transport container 1 is not particularly limited, provided that at least one cold storage material is included in the transport container 1. The transport container 1 includes preferably two or more cold storage materials 10, more preferably four or more cold storage materials 10, even more preferably six or more cold storage materials 10, and particularly preferably ten or more cold storage materials 10, from the viewpoint of storing or transporting a temperature control target article at a control temperature for an extended period of time and/or at a control temperature with stability. The number of cold storage materials 10 included in the transport container 1 may be selected as appropriate according to, for example, the size of the cold storage material 10, a period of time for which a temperature control target article is to be stored or transported, and an ambient temperature during storage or transportation of the temperature control target article.

A material of the spacers 6 is not particularly limited and may be, for example, polyurethane, polystyrene, polyethylene, polypropylene, AS resin, ABS resin, and a foamed plastic obtained by foaming such a resin.

According to an embodiment of the present invention, a pair of spacers 6 is placed in the thermal insulation container 40 so as to face each other. In a case where the transport container 1 in accordance with an embodiment of the present invention includes the spacers 6, a location at which to place the cold storage materials 10 is determined. This makes it possible to facilitate packing. The size and number of spacers 6 included in the transport container 1 are not particularly limited, and can be set as appropriate in accordance with, for example, the sizes of the transport container 1, the cold storage material 10, and a temperature control target article.

In Figs. 2 and 3, the transport container 1 includes one space 5 for accommodating a temperature control target article. However, the number of spaces 5 included in the transport container 1 is not particularly limited, provided that the transport container 1 includes at least one space 5. Alternatively, the transport container 1 may include a plurality of spaces 5. For example, separate spaces 5 may be available by placing the cold storage material(s) 10 and/or the spacer(s) 6 in one space 5.

With the transport container in accordance with an embodiment of the present invention, an article that requires temperature control (i.e., temperature control target article) can be stored or transported in a state of being maintained at an appropriate control temperature for an extended period of time, regardless of an ambient temperature. Furthermore, since the transport container in accordance with an embodiment of the present invention includes the cold storage material containing the present cold storage material composition, it is possible to stably exhibit the above appropriate control temperature.

The control temperature in the transport container in accordance with an embodiment of the present invention is not particularly limited, but is preferably in a range of - 75.0°C to -66.0°C, because it is possible to suitably use the transport container to store or transport, for example, various articles which require temperature control at relatively low temperatures, such as cells, pharmaceutical products, medical devices, specimens, organs, and chemical substances. In other words, the transport container in accordance with an embodiment of the present invention preferably enables a temperature control target article to be maintained at a temperature in a range of -75.0°C to -66.0°C for an extended period of time. Thus, the transport container in accordance with an embodiment of the present invention can also be regarded as "temperature keeping container".

Further, storage or transportation of some of the temperature control target articles, i.e., bio drug substance, regenerative cells, vaccines, antibodies, and gene therapy vectors may require the control temperature to be -68.5°C. Therefore, the transport container in accordance with an embodiment of the present invention is preferably a transport container that enables storage or transportation while enabling maintenance of a temperature at not higher than -68.5°C (e.g., a transport container that enables storage or transportation while enabling maintenance of a temperature at -75.0°C to -68.5°C), because such a transport container can be applied to articles as described above, i.e., articles which require temperature control at lower temperatures. Note that application examples of the transport container that enables storage or transportation while enabling maintenance of a temperature at not higher than -68.5°C include transportation of cells (e.g., conveyance of frozen cells inside a cell culture center, transportation of frozen cells from one facility to another facility (for example, from a cell bank to a cell culture center), and the like) and storage of cells (e.g., temporary storage of frozen cells in a sterile room or a clean bench, storage (back-up) application at a power failure in a deep freezer used in the cell bank or the cell culture center, and the like).

Note that, more specifically, the thermal insulation container described above can be configured as disclosed in Japanese Patent Application Publication Tokukai No. 2015-78307, which is incorporated herein by reference.

The following description will discuss a "method of using a cold storage material composition".

### [5. Method of using cold storage material composition]

A method of using a cold storage material composition in accordance with an embodiment of the present invention includes a solidifying step of keeping a cold storage material composition at a temperature lower than a melting temperature of the cold storage material composition to solidify the cold storage material composition, the cold storage material composition containing water, lithium ions, bromide ions, a crystal nucleating agent, and a defoaming agent and/or an alkali metal salt of a higher fatty acid; and a maintaining step of maintaining part or whole of a target object at a temperature identical to the melting temperature of the cold storage material composition in an environment at a temperature which exceeds the melting temperature of the cold storage material composition, the cold storage material composition containing the crystal nucleating agent in an amount of not less than 2.0 mol relative to 100 mol of the water, the cold storage material composition containing the defoaming agent and the alkali metal salt of the higher fatty acid in a total amount of not less than 0.0025% by weight relative to 100% by weight of the cold storage material composition.

Here, in the present specification, the "target object" is intended to mean a temperature control target article and/or an environment (including a vapor phase, a liquid phase, and a solid phase) surrounding the temperature control target article.

The "temperature identical to the melting temperature of the cold storage material composition" is intended to mean a temperature at which the cold storage material composition can maintain the temperature of the target object. Thus, for a preferable range of the "temperature identical to the melting temperature of the cold storage material composition" in the method of using a cold storage material composition in accordance with an embodiment of the present invention, the description of the melting temperature of the cold storage material composition in the section [2-2. Physical properties of cold storage material composition] can be referred to as appropriate. The "temperature identical to the melting temperature of the cold storage material composition" can also be said to be a control temperature in the method of using a cold storage material composition in accordance with an embodiment of the present invention. Note that the control temperature in the method of using a cold storage material composition in accordance with an embodiment of the present invention need not be a temperature completely identical to the melting temperature of the cold storage material composition. The control temperature may be a temperature substantially identical to the melting temperature of the cold storage material composition (e.g., in a range of a temperature 1.5°C lower than the melting temperature of the cold storage material composition to a temperature 1.5°C higher than the melting temperature of the cold storage material composition).

The cold storage material composition in the method of using a cold storage material composition in accordance with an embodiment of the present invention is preferably the cold storage material composition in accordance with an embodiment of the present invention. For the description of the cold storage material composition, the description in the section [2. Cold storage material composition] can be referred to as appropriate.

Further, the cold storage material composition in the method of using a cold storage material composition in accordance with an embodiment of the present invention is preferably a cold storage material composition produced by the method of producing a cold storage material composition in accordance with an embodiment of the present invention. For the description of the method of producing the cold storage material composition, the description in the section [2-3. Method of producing cold storage material composition] can be referred to as appropriate.

Specifically, the using method in accordance with an embodiment of the present invention can be provided in any of the following aspects (1) to (5):
(1) A method of using a cold storage material composition, including: preparing the cold storage material which is described in the section [3. Cold storage material] and which is obtained by charging a cold storage material composition into a container or the like; thereafter, keeping the cold storage material at a temperature lower than the melting temperature of the cold storage material composition to solidify the cold storage material (solidifying step); and placing the solidified cold storage material in the transport container described in the section [4. Transport container], and storing and/or transporting a target object while maintaining the target object at a temperature identical to the melting temperature of the cold storage material composition in an environment at a temperature which exceeds the melting temperature of the cold storage material composition (maintaining step).
(2) A method of using a cold storage material composition, including: putting the cold storage material, which is described in the section [3. Cold storage material] and which has been prepared by charging a cold storage material composition, in advance in a freezer, a cryogenic freezer, or the like which is operated at a temperature lower than the melting temperature of the cold storage material composition (solidifying step); and in this way, during a power failure, storing a target object in the freezer or the cryogenic freezer while maintaining the target object at a temperature identical to the melting temperature of the cold storage material composition (maintaining step).
(3) A method of using a cold storage material composition, including: in preparing the cold storage material which is described in the section [3. Cold storage material] and which is obtained by charging a cold storage material composition into a container or the like, putting the cold storage material composition in a liquid state and a target object in the container such that the target object is embedded in the cold storage material composition; thereafter, keeping the cold storage material at a temperature lower than the melting temperature of the cold storage material composition to solidify the cold storage material (solidifying step); and in this way, storing and/or transporting the target object while maintaining the target object at a temperature identical to the melting temperature of the cold storage material composition in an environment at a temperature which exceeds the melting temperature of the cold storage material composition (maintaining step).
(4) A method of using a cold storage material composition, including: preparing the cold storage material which is described in the section [3. Cold storage material] and which is obtained by charging a cold storage material composition into a container or the like; thereafter, keeping the cold storage material at a temperature lower than the melting temperature of the cold storage material composition to solidify the cold storage material (solidifying step); the solidified cold storage material is brought into contact with a target object which is present in an environment at a temperature which exceeds the melting temperature of the cold storage material composition; and in this way, maintaining a contacting part of the target object at a temperature identical to the melting temperature of the cold storage material composition (maintaining step).
(5) A method of using a cold storage material composition, including: after embedding a cold storage material composition in a liquid state in a target object, keeping the cold storage material composition at a temperature lower than the melting temperature of the cold storage material composition to solidify the cold storage material composition (solidifying step); and in this way, storing and/or transporting the target object while maintaining the target object at a temperature identical to the melting temperature of the cold storage material composition in an environment at a temperature which exceeds the melting temperature of the cold storage material composition (maintaining step).

In the using methods in (1) to (5) above, a specific method for keeping the cold storage material composition or the cold storage material which is described in the section [3. Cold storage material] at a temperature lower than the melting temperature of the cold storage material composition to solidify the cold storage material composition or the cold storage material is exemplified by the following method: that is, a method of putting the cold storage material composition or the cold storage material in a commercially available - 85°C or -80°C freezer whose temperature can be adjusted to a temperature lower than the melting temperature of the cold storage material composition, preferably a cryogenic freezer whose temperature can be adjusted to not higher than -80°C (e.g., -120°C), to solidify the cold storage material composition or the cold storage material. In the using methods in (1) to (5) above, the cold storage material composition or the cold storage material which is described in the section [3. Cold storage material] may be kept at a temperature lower than the solidification start temperature of the cold storage material composition so that the cold storage material composition or the cold storage material is solidified.

As has been described, the melting temperature of the present cold storage material composition is preferably - 75.0°C to -66.0°C. Therefore, the temperature identical to the melting temperature of the cold storage material composition in the method of using a cold storage material composition in accordance with an embodiment of the present invention is preferably -75.0°C to -66.0°C. Thus, the method of using a cold storage material composition in accordance with a preferable embodiment of the present invention can be expressed as follows: a method of using a cold storage material composition, including: a solidifying step of keeping a cold storage material composition at a temperature lower than a melting temperature of the cold storage material composition to solidify the cold storage material composition, the cold storage material composition containing water, lithium ions, bromide ions, a crystal nucleating agent, and a defoaming agent and/or an alkali metal salt of a higher fatty acid; and a maintaining step of maintaining part or whole of a target object at -75.0°C to - 66.0°C in an environment at a temperature which exceeds the melting temperature of the cold storage material composition, the cold storage material composition containing the crystal nucleating agent in an amount of not less than 2.0 mol relative to 100 mol of the water, the cold storage material composition containing the defoaming agent and the alkali metal salt of the higher fatty acid in a total amount of not less than 0.0025% by weight relative to 100% by weight of the cold storage material composition.

In the solidifying step, the temperature lower than the melting temperature is preferably a temperature of not higher than -80°C. The above configuration brings the advantage that it is possible to solidify the cold storage material composition sufficiently and in a short time.

The cold storage material composition in accordance with a specific embodiment of the present invention has excellent freezing stability. This enables the cold storage material composition to be stably frozen also in a temperature range of -85°C to -76°C to which adjustment can be made with use of in a general-purpose freezer. That is, the cold storage material composition can be stably frozen even in a case where a general-purpose freezer is used. Thus, in another embodiment of the present invention, the temperature lower than the melting temperature in the solidifying step is preferably a temperature of -85°C to -76°C. The above configuration brings the advantage that it is possible to stably solidify the cold storage material composition even with use of a general-purpose freezer.

Although some specific examples of the method of using a cold storage material composition have been given above, the method of using a cold storage material composition in accordance with an embodiment of the present invention is not limited to those examples of the using method. The method of using a cold storage material composition provided by an embodiment of the present invention encompasses any methods each including: (i) a solidifying step of keeping the cold storage material composition in accordance with an embodiment of the present invention or a cold storage material composition produced by the method of producing a cold storage material composition in accordance with an embodiment of the present invention, at a temperature lower than the melting temperature of the cold storage material composition to solidify the cold storage material composition; and (ii) a maintaining step of maintaining part or whole of a target object at a temperature identical to the melting temperature of the cold storage material composition by use of latent heat of melting of the solidified cold storage material composition in an environment at a temperature which exceeds the melting temperature of the cold storage material composition.

### [6. Others]

An embodiment of the present invention may include the following configurations.
< 1 > A cold storage material composition containing: water; lithium ions; bromide ions; a crystal nucleating agent; and a defoaming agent and/or an alkali metal salt of a higher fatty acid, the crystal nucleating agent being contained in an amount of not less than 2.0 mol relative to 100 mol of the water, the defoaming agent and the alkali metal salt of the higher fatty acid being contained in a total amount of not less than 0.0025% by weight relative to 100% by weight of the cold storage material composition.
<2> The cold storage material composition described in <1>, wherein the defoaming agent is an oil-type defoaming agent.
<3> The cold storage material composition described in <1>, wherein the alkali metal salt of the higher fatty acid is water-soluble.
<4> The cold storage material composition described in any one of <1> to <3>, wherein the lithium ions are contained in an amount of 7.6 mol to 12.6 mol and the bromide ions are contained in an amount of 8.1 mol to 14.6 mol, relative to 100 mol of the water.
<5> The cold storage material composition described in any one of <1> to <4>, wherein the lithium ions are contained in an amount of 11.0 mol to 12.5 mol relative to 100 mol of the water.
<6> The cold storage material composition described in any one of <1> to <5>, wherein the crystal nucleating agent is contained in an amount of not less than 3.2 mol relative to 100 mol of the water.
<7> The cold storage material composition described in any one of <1> to <6>, further containing a thickener.
<8> The cold storage material composition described in <7>, wherein the thickener is hydroxyethyl cellulose.
<9> A cold storage material including a cold storage material composition described in any one of <1> to <8>.
<10> A transport container including a cold storage material described in <9>.
<11> A method of using a cold storage material composition, including: a solidifying step of keeping a cold storage material composition at a temperature lower than a melting temperature of the cold storage material composition to solidify the cold storage material composition, the cold storage material composition containing water, lithium ions, bromide ions, a crystal nucleating agent, and a defoaming agent and/or an alkali metal salt of a higher fatty acid; and a maintaining step of maintaining part or whole of a target object at a temperature identical to the melting temperature of the cold storage material composition in an environment at a temperature which exceeds the melting temperature of the cold storage material composition, in the cold storage material composition, the crystal nucleating agent being contained in an amount of not less than 2.0 mol relative to 100 mol of the water, the defoaming agent and the alkali metal salt of the higher fatty acid being contained in a total amount of not less than 0.0025% by weight relative to 100% by weight of the cold storage material composition.
<12> The method described in <11>, wherein, in the solidifying step, the temperature lower than the melting temperature is a temperature of not higher -80°C.
<13> The method described in <11>, wherein, in the solidifying step, the temperature lower than the melting temperature is -85°C to -76°C.

### Examples

The following description will more specifically discuss an embodiment of the present invention with reference to Examples. However, the present invention is not limited only to such Examples.

The following materials were used in Examples and Comparative Examples.

### <Inorganic salt>

Aqueous lithium bromide solution [Aqueous lithium bromide solution (having a lithium bromide concentration of 55.0% by weight), available from The Honjo Chemical Corporation]

### <Crystal nucleating agent>

Sodium chloride [Refined salt, available from Nippon Salt Manufacturing Co., Ltd.]
Sodium bromide [Sodium bromide, available from MANAC INCORPORATED]

### <Thickener>

Hydroxyethyl cellulose (HEC) [HEC Daicel, available from Daicel FineChem Ltd.]

### <Defoaming agent>

### (Defoaming agent composition)

Bisfoam GC-85 [silicone-type defoaming agent, Nissin Kagaku Kenkyusho Co., Ltd.]
Bisfoam TDI-10 [emulsion-type defoaming agent, Nissin Kagaku Kenkyusho Co., Ltd.]
Bisfoam TMR-10 [emulsion-type defoaming agent, Nissin Kagaku Kenkyusho Co., Ltd.]
Bisfoam ECC [surfactant-type defoaming agent, Nissin Kagaku Kenkyusho Co., Ltd.]
Bisfoam EB [surfactant-type defoaming agent, Nissin Kagaku Kenkyusho Co., Ltd.]
Bisfoam GC-214 [silicone-type defoaming agent, Nissin Kagaku Kenkyusho Co., Ltd.]
Bisfoam GC-450 [silicone-type defoaming agent, Nissin Kagaku Kenkyusho Co., Ltd.]
Bisfoam SS-2 [oil-type defoaming agent, Nissin Kagaku Kenkyusho Co., Ltd.]
Bisfoam K-301 [oil-type defoaming agent, Nissin Kagaku Kenkyusho Co., Ltd.]
Bisfoam DQ-3 [oil-type defoaming agent, Nissin Kagaku Kenkyusho Co., Ltd.]
Bisfoam DP [oil-type defoaming agent, Nissin Kagaku Kenkyusho Co., Ltd.]
Bisfoam S-25 [surfactant-type defoaming agent, Nissin Kagaku Kenkyusho Co., Ltd.]

### <Alkali metal salt of higher fatty acid>

KS-3 [potassium laurate (K), Nitto Kasei Co., Ltd.]
KSt [potassium stearate (K), Nitto Kasei Co., Ltd.]

### <Water>

### Drinking tap water

### <Preparation of cold storage material composition>

As described above, a commercially-available aqueous lithium bromide solution was used. An aqueous solution of a crystal nucleating agent and an aqueous solution(s) of a compound(s) described as the other component(s) were prepared in advance by dissolving these compounds in water at room temperature. As a defoaming agent, a commercially available defoaming agent composition was used as it was. A 5wt% aqueous solution of an alkali metal salt of a higher fatty acid was prepared by dissolving the alkali metal salt of a higher fatty acid in water, and then the 5wt% aqueous solution was used.

A thickener was dispersed in the aqueous solution of the crystal nucleating agent at room temperature in advance, and the aqueous solution of the crystal nucleating agent in which aqueous solution the thickener was dispersed was prepared.

In accordance with each composition shown in Tables 1 to 3, the aqueous solution of the lithium bromide was set to 40°C, and then the defoaming agent composition at room temperature was added to and dissolved or dispersed in the aqueous solution of the lithium bromide. Moreover, the aqueous solution of the crystal nucleating agent in which aqueous solution the thickener was dispersed (at room temperature) was mixed. In this manner, cold storage material compositions in Examples 1 to 24 were prepared.

In accordance with each composition shown in Table 4, the aqueous solution of the lithium bromide was set to 40°C, and then the 5wt% aqueous solution of the alkali metal salt of the higher fatty acid at room temperature was added to and dissolved or dispersed in the aqueous solution of the lithium bromide. Moreover, the aqueous solution of the crystal nucleating agent in which aqueous solution the thickener was dispersed (at room temperature) was mixed. In this manner, cold storage material compositions in Examples 25 to 34 were prepared.

In accordance with each composition shown in Table 1 or 2, the aqueous solution of the lithium bromide was set to 40°C, and then the aqueous solution of the crystal nucleating agent in which aqueous solution the thickener was dispersed (at room temperature) was mixed to the aqueous solution of the lithium bromide. In this manner, cold storage material compositions in Comparative Examples 1 to 3 were prepared.

Measurements and evaluations in Examples and Comparative Examples were carried out under conditions below and by methods below.

### <-80°C to -30°C cycle test>

In a cryovial made of polypropylene, 1.8 ml of a cold storage material composition was charged. Then, the cryovial was placed in a thermostatic bath [Ultracold aluminum block thermostatic bath CRYO PORTER (registered trademark) CS-80CP, available from SCINICS CORPORATION]. This cold storage material composition was subjected to the "-80°C to -30°C cycle test" under the following procedure: (1) the temperature inside the thermostatic bath was maintained at -30°C for 1 hour; (2) the temperature inside the thermostatic bath was decreased from -30°C to -80°C at a temperature decrease rate of 0.5°C/min; subsequently, (3) the temperature inside the thermostatic bath was maintained at -80°C for 1 hour; and then (4) the temperature inside the thermostatic bath was increased from -80°C to -30°C at a temperature increase rate of 0.5°C/min. These operations (1) to (4) were regarded as one cycle, and this cycle was repeated not less than 15 times. Regarding a process in (4), a melting temperature was calculated with use of a definition below. Note that, in a case where a melting temperature was not exhibited at a temperature of not higher than -66°C, calculation of the melting temperature was not carried out.

### (Melting temperature calculating method (-80°C to - 30°C cycle test))

Fig. 1 shows a graph obtained by plotting the temperature of the cold storage material composition in the thermostatic bath versus time in the process in (4). As compared with the temperature of the thermostatic bath which was increased at a constant rate, the temperature of the cold storage material composition changed, as shown in Fig. 1, in the order of the following (1) to (3): (1) the temperature of the cold storage material composition increased at a constant rate or a substantially constant rate from -80°C to a certain temperature (regarded as temperature T₁); (2) there was little change from the temperature T₁ to a certain temperature (regarded as temperature T₂) due to latent heat of the cold storage material composition; and (3) the temperature of the cold storage material composition started increasing again after the temperature T₂. In the present specification, the temperature T₁ is referred to as "melting start temperature", and the temperature T₂ is referred to as "melting end temperature". A midpoint between the temperature T₁ and the temperature T₂, i.e., temperature T₃, is defined as "melting temperature" in the present specification. Note that an average value of melting temperatures in the respective cycles was regarded as an average melting temperature.

Furthermore, a result of the -80°C to -30°C cycle test on the cold storage material composition was assessed on the basis of the following criteria.

### (-80°C to -30°C cycle test assessment criteria)

5: A frequency at which the melting temperature was exhibited at a temperature of lower than -68.5°C was 100%. 4: The frequency at which the melting temperature was exhibited at a temperature of lower than -68.5°C was not less than 70% and less than 100%.

3: The frequency at which the melting temperature was exhibited at a temperature of lower than -68.5°C was not less than 50% and less than 70%.

2: The frequency at which the melting temperature was exhibited at a temperature of lower than -68.5°C was not less than 20% and less than 50%.

1: The frequency at which the melting temperature was exhibited at a temperature of lower than -68.5°C was less than 20%.

Note that, in the above criteria, the frequency at which the melting temperature was exhibited at a temperature of lower than -68.5°C is a frequency at which a lower one of two melting temperatures that could be detected in the cycle test on each of the cold storage material compositions of Examples 1 to 24 and Comparative Examples 1 to 3 was exhibited. Therefore, it is possible to evaluate the cold storage material composition having a higher frequency, i.e., a higher evaluation value, as being excellent in melting temperature and stability of the melting temperature. Note also that the cold storage material composition having an evaluation value of 2 or more was regarded as being acceptable.

Regarding the cycles in the -80°C to -30°C cycle test, the fixed-temperature retention, the temperature keeping property, and the duration of the cold storage material composition were measured and evaluated in accordance with definitions below. Note that, in the -80°C to -30°C cycle test, a plurality of cycles were carried out with respect to one cold storage material composition. Accordingly, regarding each of the fixed-temperature retention, the temperature keeping property, and the duration, measurement results, the number of which corresponded to the number of times the cycles were carried out, were obtained. Thus, among the measurement results in which melting behavior was found, the worst measurement result (value) was regarded as each of the fixed-temperature retention and the duration of the cold storage material composition, and each of the fixed-temperature retention and the duration of the cold storage material composition was evaluated on the basis of the worst measurement result (value).

### (Fixed-temperature retention assessment criteria (-80°C to -30°C cycle test))

Regarding a temperature change plot of the cold storage material composition, the temperature change plot having been obtained in the process of temperature increase (0.5°C/min) in the ultracold aluminum block thermostatic bath, the temperature keeping property and the duration were evaluated. Next, the fixed-temperature retention of the cold storage material composition was evaluated on the basis of results of evaluation of the temperature keeping property and the duration. Specifically, the temperature keeping property and the duration were evaluated such that the cold storage material composition was evaluated as "having fixed-temperature retention" in a case where the cold storage material composition was rated as "G" (Good) or higher for both the temperature keeping property and the duration, i.e., in a case where, due to the action of latent heat of the cold storage material composition, (i) the temperature of the cold storage material composition was maintained, from a melting start temperature T₁ to a melting end temperature T₂, in a range from the melting start temperature T₁ to a temperature less than 2.5°C higher than the melting start temperature T₁ and (ii) the duration (in other words, a period of time from the melting start temperature T₁ to the melting end temperature T₂) was 10 minutes or longer. The fixed-temperature retention was evaluated such that the cold storage material composition having fixed-temperature retention was rated as "G" (Good), and the cold storage material composition having no fixed-temperature retention was rated as "P" (Poor). Note that the temperature keeping property and the duration were evaluated in accordance with the following definitions and criteria.

### (Temperature keeping property assessment criteria (-80°C to -30°C cycle test))

### <Temperature keeping property>

In the temperature change plot of the cold storage material composition, the temperature change plot having been obtained in the process of temperature increase (0.5°C/min) in the ultracold aluminum block thermostatic bath, a temperature difference from the melting start temperature T₁ to the melting end temperature T₂ was measured, and the temperature keeping property of the cold storage material composition was evaluated on the basis of a measurement result. The temperature keeping property was evaluated such that the melting end temperature T₂ being not less than 2.5°C higher than the melting start temperature T₁ was evaluated as "P" (Poor), the melting end temperature T₂ being not less than 2.0°C higher than the melting start temperature T₁ and less than 2.5°C higher than the melting start temperature T₁ was evaluated as "G" (Good), and the melting end temperature T₂ being less than 2.0°C higher than the melting start temperature T₁ was evaluated as "E" (Excellent).

### (Duration assessment criteria (-80°C to -30°C cycle test))

### <Duration>

In the temperature change plot of the cold storage material composition, the temperature change plot having been obtained in the process of temperature increase (0.5°C/min) in the ultracold aluminum block thermostatic bath, a period of time from the melting start temperature T₁ to the melting end temperature T₂ was measured, and the period of time was regarded as "duration". The duration was evaluated as follows. In a case where the duration was shorter than 10 minutes, the cold storage material composition was evaluated as "P" (Poor). In a case where the duration was not shorter than 10 minutes and shorter than 16 minutes, the cold storage material composition was evaluated as "G" (Good). In a case where the duration was not shorter than 16 minutes, the cold storage material composition was evaluated as "E" (Excellent).

### (Presence or absence of sediment after cycle test (-80°C to -30°C cycle test))

The cryovial after the -80°C to -30°C cycle test was left to stand in a room-temperature atmosphere, and the cold storage material composition in the cryovial was melted. Deposition of a salt and/or a sedimentary state of the salt in the cold storage material composition in a melted state at room temperature was/were visually observed. The presence or absence of a sediment after the cycle test was evaluated in accordance with the following criteria. In a case where deposition of the salt and/or sedimentation of the salt was/were observed, the cold storage material composition was rated as "P" (Poor). In a case where neither deposition of the salt nor sedimentation of the salt was observed, the cold storage material composition was rated "G" (Good).

### <-80°C to 20°C cycle test>

In a cryovial made of polypropylene, 1.8 ml of the cold storage material composition was charged. Then, the cryovial was placed in a thermostatic bath [Ultracold aluminum block thermostatic bath CRYO PORTER (registered trademark) CS-80CP, available from SCINICS CORPORATION]. This cold storage material composition was subjected to the "-80°C to 20°C cycle test" under the following procedure: (1) the temperature inside the thermostatic bath was maintained at 20°C for 1 hour; (2) the temperature inside the thermostatic bath was decreased from 20°C to -80°C at a temperature decrease rate of 0.5°C/min; subsequently, (3) the temperature inside the thermostatic bath was maintained at -80°C for 1 hour; and then (4) the temperature inside the thermostatic bath was increased from -80°C to 20°C at a temperature increase rate of 0.5°C/min. These operations (1) to (4) were regarded as one cycle, and this cycle was repeated not less than 15 times. Regarding a process in (4), a melting temperature was calculated with use of a definition below. Note that, in a case where the melting temperature was not exhibited at a temperature of not higher than -66°C, calculation of the melting temperature was not carried out.

### (Melting temperature calculating method (-80°C to 20°C cycle test))

The melting temperature and an average melting temperature of the cold storage material composition in the -80°C to 20°C cycle test were calculated by a method similar to the method of calculating the melting temperature and the average melting temperature in the above -80°C to -30°C cycle test.

Furthermore, a result of the -80°C to 20°C cycle test on the cold storage material composition was assessed on the basis of the following criteria.

### (-80°C to 20°C cycle test assessment criteria)

5: A frequency at which the melting temperature was exhibited at a temperature of lower than -68.5°C was 100%. 4: The frequency at which the melting temperature was exhibited at a temperature of lower than -68.5°C was not less than 70% and less than 100%.

3: The frequency at which the melting temperature was exhibited at a temperature of lower than -68.5°C was not less than 50% and less than 70%.

2: The frequency at which the melting temperature was exhibited at a temperature of lower than -68.5°C was not less than 20% and less than 50%.

1: The frequency at which the melting temperature was exhibited at a temperature of lower than -68.5°C was less than 20%.

Note that, in the above criteria, the frequency at which the melting temperature was exhibited at a temperature of lower than -68.5°C is a frequency at which a lower one of two melting temperatures that could be detected in the cycle test on each of the cold storage material compositions of Examples 1 to 24 and Comparative Examples 1 to 3 was exhibited. Therefore, it is possible to evaluate the cold storage material composition having a higher frequency, i.e., a higher evaluation value, as being excellent in melting temperature and stability of the melting temperature. Note also that the cold storage material composition having an evaluation value of 2 or more was regarded as being acceptable.

Regarding the cycles in the -80°C to 20°C cycle test, the fixed-temperature retention, the temperature keeping property, and the duration of the cold storage material composition were measured and evaluated in accordance with definitions below. Note that, in the -80°C to 20°C cycle test, a plurality of cycles were carried out with respect to one cold storage material composition. Accordingly, regarding each of the fixed-temperature retention and the duration, measurement results, the number of which corresponded to the number of times the cycles were carried out, were obtained. Thus, among the measurement results in which melting behavior was found, the worst measurement result was regarded as each of the fixed-temperature retention and the duration of the cold storage material composition, and each of the fixed-temperature retention and the duration of the cold storage material composition was evaluated on the basis of the worst measurement result.

### (Fixed-temperature retention assessment criteria (-80°C to 20°C cycle test))

Regarding a temperature change plot of the cold storage material composition, the temperature change plot having been obtained in the process of temperature increase (0.5°C/min) in the ultracold aluminum block thermostatic bath, the temperature keeping property and the duration were evaluated. Next, the fixed-temperature retention of the cold storage material composition was evaluated on the basis of results of evaluation of the temperature keeping property and the duration. Specifically, the temperature keeping property and the duration were evaluated such that the cold storage material composition was evaluated as "having fixed-temperature retention" in a case where the cold storage material composition was rated as "G" (Good) or higher for both the temperature keeping property and the duration, i.e., in a case where, due to the action of latent heat of the cold storage material composition, (i) the temperature of the cold storage material composition was maintained, from a melting start temperature T₁ to a melting end temperature T₂, in a range from the melting start temperature T₁ to a temperature less than 2.5°C higher than the melting start temperature T₁ and (ii) the duration (in other words, a period of time from the melting start temperature T₁ to the melting end temperature T₂) was 10 minutes or longer. The fixed-temperature retention was evaluated such that the cold storage material composition having fixed-temperature retention was rated as "G" (Good), and the cold storage material composition having no fixed-temperature retention was rated as "P" (Poor). Note that the temperature keeping property and the duration were evaluated in accordance with the following definitions and criteria.

### (Temperature keeping property assessment criteria (-80°C to 20°C cycle test))

### <Temperature keeping property>

In the temperature change plot of the cold storage material composition, the temperature change plot having been obtained in the process of temperature increase (0.5°C/min) in the ultracold aluminum block thermostatic bath, a temperature difference from the melting start temperature T₁ to the melting end temperature T₂ was measured, and the temperature keeping property of the cold storage material composition was evaluated on the basis of a measurement result. The temperature keeping property was evaluated such that the melting end temperature T₂ being not less than 2.5°C higher than the melting start temperature T₁ was evaluated as "P" (Poor), the melting end temperature T₂ being not less than 2.0°C higher than the melting start temperature T₁ and less than 2.5°C higher than the melting start temperature T₁ was evaluated as "G" (Good), and the melting end temperature T₂ being less than 2.0°C higher than the melting start temperature T₁ was evaluated as "E" (Excellent).

### (Duration assessment criteria (-80°C to 20°C cycle test))

### <Duration>

In the temperature change plot of the cold storage material composition, the temperature change plot having been obtained in the process of temperature increase (0.5°C/min) in the ultracold aluminum block thermostatic bath, a period of time from the melting start temperature T₁ to the melting end temperature T₂ was measured, and the period of time was regarded as "duration". The duration was evaluated as follows. In a case where the duration was shorter than 10 minutes, the cold storage material composition was evaluated as "P" (Poor). In a case where the duration was not shorter than 10 minutes and shorter than 16 minutes, the cold storage material composition was evaluated as "G" (Good). In a case where the duration was not shorter than 16 minutes, the cold storage material composition was evaluated as "E" (Excellent).

### (Presence or absence of sediment after cycle test (-80°C to 20°C cycle test))

The cryovial after the -80°C to 20°C cycle test was left to stand in a room-temperature atmosphere, and the cold storage material composition in the cryovial was melted. Deposition of the salt and/or a sedimentary state of the salt in the cold storage material composition in a melted state at room temperature was/were visually observed. The presence or absence of a sediment after the cycle test was evaluated in accordance with the following criteria. In a case where deposition of the salt and/or sedimentation of the salt was/were observed, the cold storage material composition was rated as "P" (Poor). In a case where neither deposition of the salt nor sedimentation of the salt was observed, the cold storage material composition was rated "G" (Good).

### <Easy handling (low toxicity)>

A chemical substance risk assessment evaluation in accordance with the Industrial Safety and Health Act in Japan was carried out with respect to the cold storage material composition. In the case of chemical risk 5, the cold storage material composition was rated as "P" (Poor). In the case of chemical risk 4, the cold storage material composition was rated as "A" (Acceptable). In the case of chemical risk 3 or lower, the cold storage material composition was rated as "G" (Good).

### <Test results>

Test results are shown in Tables 1 to 3. All of the cold storage material compositions prepared in Examples 1 to 11 contain water, lithium ions, and bromide ions. All of the lithium bromide, the sodium chloride, and the sodium bromide that were used in Examples 1 to 24 and Comparative Examples 1 to 3 dissociate in water at room temperature. In Examples 1 to 24 and Comparative Examples 1 to 3, none of the compounds were removed from the prepared mixtures. Thus, the amounts of the lithium ions, the bromide ions, and the chloride ions in Examples 1 to 24 and Comparative Examples 1 to 3 shown in Tables 1 to 3 are values obtained by theoretical calculation from chemical formulae and the amounts of the lithium bromide, the sodium chloride, and the sodium bromide that were used.

### [Table 1]

**(Table 1)**

| | | | | Example 1 | Example 2 | Example 3 | Example 4 |
|---|---|---|---|---|---|---|---|
| Blended amount | Inorganic salt | Lithium bromide | Number of moles relative to 100 mol of water | 10.2 | 10.2 | 10.2 | 10.2 |
| | Crystal nucleating agent | Sodium chloride | | 2.0 | 2.0 | 2.0 | 2.0 |
| | | Sodium bromide | | 1.5 | 1.5 | 1.5 | 1.5 |
| | Defoaming agent | Grade name | | GC-85 | GC-85 | GC-85 | GC-85 |
| | | Type | | Silicone | Silicone | Silicone | Silicone |
| | | Added amount | % by weight | 0.1 | 0.2 | 0.1 | 0.2 |
| | Thickener | HEC | % by weight | 0.5 | 0.5 | 1.1 | 1.1 |
| | Number of moles of crystal nucleating agent | Sodium chloride + Sodium bromide | - | 3.5 | 3.5 | 3.5 | 3.5 |
| Ion concentration | Lithium ions (Li⁺) | | Number of moles relative to 100 mol of water | 10.2 | 10.2 | 10.2 | 10.2 |
| | Bromide ions (Br⁻) | | | 11.7 | 11.7 | 11.7 | 11.7 |

**(Table 1)**

| | | | | Comparative Example 1 | Comparative Example 2 |
|---|---|---|---|---|---|
| Blended amount | Inorganic salt | Lithium bromide | Number of moles relative to 100 mol of water | 10.2 | 10.2 |
| | Crystal nucleating agent | Sodium chloride | | 2.0 | 2.0 |
| | | Sodium bromide | | 1.5 | 1.5 |
| | Defoaming agent | Grade name | | - | - |
| | | Type | | - | - |
| | | Added amount | % by weight | 0.0 | 0.0 |
| | Thickener | HEC | % by weight | 0.5 | 1.1 |
| | Number of moles of crystal nucleating agent | Sodium chloride + Sodium bromide | - | 3.5 | 3.5 |
| Ion concentration | Lithium ions (Li⁺) | | Number of moles relative to 100 mol of water | 10.2 | 10.2 |
| | Bromide ions (Br⁻) | | | 11.7 | 11.7 |

**(Table 1)**

| | | | | Example 1 | Example 2 | Example 3 | Example 4 |
|---|---|---|---|---|---|---|---|
| Evaluation result | -80°C to -30°C cycle test | Frequency at which melting temperature was exhibited at temperature of lower than -68.5°C | % | 25 | 70 | 45 | 50 |
| | | Frequency at which melting temperature was exhibited at temperature of -68.5°C to -66°C | % | 75 | 30 | 55 | 50 |
| | | Frequency at which melting temperature was not exhibited at temperature of not higher than -66°C | % | 0 | 0 | 0 | 0 |
| | | Assessment | - | 2 | 4 | 2 | 3 |
| | | Average melting temperature | °C | -67.5 | -68.5 | -68.1 | -67.9 |
| | | Fixed-temperature retention | Assessment | G | G | G | G |
| | | Temperature keeping property | Assessment | G | G | G | G |
| | | Duration | Assessment | E | E | E | E |
| | | Presence or absence of sediment after cycle test | | G | G | G | G |

**(Table 1)**

| | | | | Comparative Example 1 | Comparative Example 2 |
|---|---|---|---|---|---|
| Evaluation result | -80°C to -30°C cycle test | Frequency at which melting temperature was exhibited at temperature of lower than -68.5°C | % | 5 | 0 |
| | | Frequency at which melting temperature was exhibited at temperature of -68.5°C to -66°C | % | 90 | 95 |
| | | Frequency at which melting temperature was not exhibited at temperature of not higher than -66°C | % | 5 | 5 |
| | | Assessment | - | 1 | 1 |
| | | Average melting temperature | °C | -66.8 | -67.1 |
| | | Fixed-temperature retention | Assessment | G | G |
| | | Temperature keeping property | Assessment | G | G |
| | | Duration | Assessment | E | E |
| | | Presence or absence of sediment after cycle test | | G | G |

**(Table 1)**

| | | | | Example 1 | Example 2 | Example 3 | Example 4 |
|---|---|---|---|---|---|---|---|
| Evaluation result | -80°C to 20°C cycle test | Frequency at which melting temperature was exhibited at temperature of lower than -68.5°C | % | 0 | 0 | 0 | 0 |
| | | Frequency at which melting temperature was exhibited at temperature of -68.5°C to -66°C | % | 0 | 0 | 0 | 0 |
| | | Frequency at which melting temperature was not exhibited at temperature of not higher than -66°C | % | 100 | 100 | 100 | 100 |
| | | Assessment | - | 1 | 1 | 1 | 1 |
| | | Average melting temperature | °C | - | - | - | - |
| | | Fixed-temperature retention | Assessment | - | - | - | - |
| | | Temperature keeping property | Assessment | - | - | - | - |
| | | Duration | Assessment | - | - | - | - |
| | | Presence or absence of sediment after cycle test | | G | G | G | G |
| | Easy handling | | | G | G | G | G |

**(Table 1)**

| | | | | Comparative Example 1 | Comparative Example 2 |
|---|---|---|---|---|---|
| Evaluation result | -80°C to 20°C cycle test | Frequency at which melting temperature was exhibited at temperature of lower than -68.5°C | % | 0 | 0 |
| | | Frequency at which melting temperature was exhibited at temperature of -68.5°C to -66°C | % | 0 | 0 |
| | | Frequency at which melting temperature was not exhibited at temperature of not higher than -66°C | % | 100 | 100 |
| | | Assessment | - | 1 | 1 |
| | | Average melting temperature | °C | - | - |
| | | Fixed-temperature retention | Assessment | - | - |
| | | Temperature keeping property | Assessment | - | - |
| | | Duration | Assessment | - | - |
| | | Presence or absence of sediment after cycle test | | G | G |
| | Easy handling | | | G | G |

### [Table 2]

**(Table 2)**

| | | | | Example 5 | Example 6 | Example 7 | Example 8 |
|---|---|---|---|---|---|---|---|
| Blended amount | Inorganic salt | Lithium bromide | Number of moles relative to 100 mol of water | 10.2 | 10.2 | 10.2 | 10.2 |
| | Crystal nucleating agent | Sodium chloride | | 2.0 | 2.0 | 2.0 | 2.0 |
| | | Sodium bromide | | 1.5 | 1.5 | 1.5 | 1.5 |
| | Defoaming agent | Grade name | | TDI-10 | TMR-10 | ECC | EB |
| | | Type | | Silicone | Emulsion | Surfactant | Surfactant |
| | | Added amount | % by weight | 0.2 | 0.2 | 0.2 | 0.2 |
| | Thickener | HEC | % by weight | 0.9 | 0.9 | 0.9 | 0.9 |
| | Number of moles of crystal nucleating agent | Sodium chloride + Sodium bromide | - | 3.5 | 3.5 | 3.5 | 3.5 |
| Ion concentration | Lithium ions (Li⁺) | | Number of moles relative to 100 mol of water | 10.2 | 10.2 | 10.2 | 10.2 |
| | Bromide ions (Br⁻) | | | 11.7 | 11.7 | 11.7 | 11.7 |

**(Table 2)**

| | | | | Example 9 | Example 10 | Example 11 | Example 12 |
|---|---|---|---|---|---|---|---|
| Blended amount | Inorganic salt | Lithium bromide | Number of moles relative to 100 mol of water | 10.2 | 10.2 | 10.2 | 10.2 |
| | Crystal nucleating agent | Sodium chloride | | 2.0 | 2.0 | 2.0 | 2.0 |
| | | Sodium bromide | | 1.5 | 1.5 | 1.5 | 1.5 |
| | Defoaming agent | Grade name | | ASV | GC-85 | CC-214 | CC-450 |
| | | Type | | Surfactant | Silicone | Silicone | Silicone |
| | | Added amount | % by weight | 0.2 | 0.2 | 0.2 | 0.2 |
| | Thickener | HEC | % by weight | 0.9 | 0.9 | 0.9 | 0.9 |
| | Number of moles of crystal nucleating agent | Sodium chloride + Sodium bromide | - | 3.5 | 3.5 | 3.5 | 3.5 |
| Ion concentration | Lithium ions (Li⁺) | | Number of moles relative to 100 mol of water | 10.2 | 10.2 | 10.2 | 10.2 |
| | Bromide ions (Br⁻) | | | 11.7 | 11.7 | 11.7 | 11.7 |

**(Table 2)**

| | | | | Example 13 | Example 14 | Comparative Example 3 |
|---|---|---|---|---|---|---|
| Blended amount | Inorganic salt | Lithium bromide | Number of moles relative to 100 mol of water | 10.2 | 10.2 | 10.2 |
| | Crystal nucleating agent | Sodium chloride | | 2.0 | 2.0 | 2.0 |
| | | Sodium bromide | | 1.5 | 1.5 | 1.5 |
| | Defoaming agent | Grade name | | SS-2 | K-301 | - |
| | | Type | | Oil | Oil | - |
| | | Added amount | % by weight | 0.2 | 0.2 | 0.0 |
| | Thickener | HEC | % by weight | 0.9 | 0.9 | 0.9 |
| | Number of moles of crystal nucleating agent | Sodium chloride + Sodium bromide | - | 3.5 | 3.5 | 3.5 |
| Ion concentration | Lithium ions (Li⁺) | | Number of moles relative to 100 mol of water | 10.2 | 10.2 | 10.2 |
| | Bromide ions (Br⁻) | | | 11.7 | 11.7 | 11.7 |

**(Table 2)**

| | | | | Example 5 | Example 6 | Example 7 | Example 8 |
|---|---|---|---|---|---|---|---|
| Evaluation result | -80°C to -30°C cycle test | Frequency at which melting temperature was exhibited at temperature of lower than -68.5°C | % | 33 | 39 | 22 | 67 |
| | | Frequency at which melting temperature was exhibited at temperature of -68.5°C to -66°C | % | 67 | 61 | 78 | 33 |
| | | Frequency at which melting temperature was not exhibited at temperature of not higher than -66°C | % | 0 | 0 | 0 | 0 |
| | | Assessment | - | 2 | 2 | 2 | 3 |
| | | Average melting temperature | °C | -66.9 | -66.8 | -66.5 | -67.6 |
| | | Fixed-temperature retention | Assessment | G | G | G | G |
| | | Temperature keeping property | Assessment | E | E | E | E |
| | | Duration | Assessment | E | E | E | E |
| | | Presence or absence of sediment after cycle test | | G | G | G | G |

**(Table 2)**

| | | | | Example 9 | Example 10 | Example 11 | Example 12 |
|---|---|---|---|---|---|---|---|
| Evaluation result | -80°C to -30°C cycle test | Frequency at which melting temperature was exhibited at temperature of lower than -68.5°C | % | 50 | 56 | 78 | 50 |
| | | Frequency at which melting temperature was exhibited at temperature of -68.5°C to -66°C | % | 50 | 44 | 22 | 50 |
| | | Frequency at which melting temperature was not exhibited at temperature of not higher than -66°C | % | 0 | 0 | 0 | 0 |
| | | Assessment | - | 3 | 3 | 4 | 3 |
| | | Average melting temperature | °C | -67.1 | -68.1 | -68.4 | -68.1 |
| | | Fixed-temperature retention | Assessment | G | G | G | G |
| | | Temperature keeping property | Assessment | G | G | G | G |
| | | Duration | Assessment | E | E | E | E |
| | | Presence or absence of sediment after cycle test | | G | G | G | G |

**(Table 2)**

| | | | | Example 13 | Example 14 | Comparative Example 3 |
|---|---|---|---|---|---|---|
| Evaluation result | -80°C to -30°C cycle test | Frequency at which melting temperature was exhibited at temperature of lower than -68.5°C | % | 100 | 100 | 0 |
| | | Frequency at which melting temperature was exhibited at temperature of -68.5°C to -66°C | % | 0 | 0 | 95 |
| | | Frequency at which melting temperature was not exhibited at temperature of not higher than -66°C | % | 0 | 0 | 5 |
| | | Assessment | - | 5 | 5 | 1 |
| | | Average melting temperature | °C | -69.4 | -69.1 | -66.0 |
| | | Fixed-temperature retention | Assessment | G | G | G |
| | | Temperature keeping property | Assessment | G | G | G |
| | | Duration | Assessment | E | E | E |
| | | Presence or absence of sediment after cycle test | | G | G | G |

**(Table 2)**

| | | | | Example 5 | Example 6 | Example 7 | Example 8 |
|---|---|---|---|---|---|---|---|
| Evaluation result | -80°C to 20°C cycle test | Frequency at which melting temperature was exhibited at temperature of lower than -68.5°C | % | 0 | 0 | 0 | 0 |
| | | Frequency at which melting temperature was exhibited at temperature of -68.5°C to -66°C | % | 100 | 95 | 100 | 75 |
| | | Frequency at which melting temperature was not exhibited at temperature of not higher than -66°C | % | 0 | 5 | 0 | 25 |
| | | Assessment | - | 1 | 1 | 1 | 1 |
| | | Average melting temperature | °C | -67.1 | -66.8 | -67.4 | -66.7 |
| | | Fixed-temperature retention | Assessment | P | P | P | G |
| | | Temperature keeping property | Assessment | G | G | G | G |
| | | Duration | Assessment | P | P | P | E |
| | | Presence or absence of sediment after cycle test | | G | G | G | G |
| | Easy handling | | | G | G | G | G |

**(Table 2)**

| | | | | Example 9 | Example 10 | Example 11 | Example 12 |
|---|---|---|---|---|---|---|---|
| Evaluation result | -80°C to 20°C cycle test | Frequency at which melting temperature was exhibited at temperature of lower than -68.5°C | % | 0 | 0 | 0 | 0 |
| | | Frequency at which melting temperature was exhibited at temperature of -68.5°C to -66°C | % | 20 | 0 | 90 | 100 |
| | | Frequency at which melting temperature was not exhibited at temperature of not higher than -66°C | % | 80 | 100 | 10 | 0 |
| | | Assessment | - | 1 | 1 | 1 | 1 |
| | | Average melting temperature | °C | -66.8 | - | -67.1 | -67.0 |
| | | Fixed-temperature retention | Assessment | G | - | G | G |
| | | Temperature keeping property | Assessment | G | - | G | G |
| | | Duration | Assessment | G | - | E | E |
| | | Presence or absence of sediment after cycle test | | G | G | G | G |
| | Easy handling | | | G | G | G | G |

**(Table 2)**

| | | | | Example 13 | Example 14 | Comparative Example 3 |
|---|---|---|---|---|---|---|
| Evaluation result | -80°C to 20°C cycle test | Frequency at which melting temperature was exhibited at temperature of lower than -68.5°C | % | 0 | 0 | 0 |
| | | Frequency at which melting temperature was exhibited at temperature of -68.5°C to -66°C | % | 100 | 100 | 0 |
| | | Frequency at which melting temperature was not exhibited at temperature of not higher than -66°C | % | 0 | 0 | 100 |
| | | Assessment | - | 1 | 1 | 1 |
| | | Average melting temperature | °C | -67.1 | -67.3 | - |
| | | Fixed-temperature retention | Assessment | G | G | - |
| | | Temperature keeping property | Assessment | G | G | - |
| | | Duration | Assessment | E | E | - |
| | | Presence or absence of sediment after cycle test | | G | G | G |
| | Easy handling | | | G | G | G |

### [Table 3]

**(Table 3)**

| | | | | Example 15 | Example 16 | Example 17 | Example 18 |
|---|---|---|---|---|---|---|---|
| Blended amount | Inorganic salt | Lithium bromide | Number of moles relative to 100 mol of water | 12.2 | 12.2 | 12.2 | 12.2 |
| | Crystal nucleating agent | Sodium chloride | | 2.6 | 2.6 | 2.6 | 2.6 |
| | | Sodium bromide | | 1.5 | 1.5 | 1.5 | 1.5 |
| | Defoaming agent | Grade name | | K-301 | SS-2 | DQ-3 | DP |
| | | Type | | Oil | Oil | Oil | Oil |
| | | Added amount | % by weight | 0.2 | 0.2 | 0.2 | 0.2 |
| | Thickener | HEC | % by weight | 0.7 | 0.7 | 0.7 | 0.7 |
| | Number of moles of crystal nucleating agent | Sodium chloride + Sodium bromide | - | 4.1 | 4.1 | 4.1 | 4.1 |
| Ion concentration | Lithium ions (Li⁺) | | Number of moles relative to 100 mol of water | 12.2 | 12.2 | 12.2 | 12.2 |
| | Bromide ions (Br⁻) | | | 13.7 | 13.7 | 13.7 | 13.7 |

**(Table 3)**

| | | | | Example 19 | Example 20 | Example 21 |
|---|---|---|---|---|---|---|
| Blended amount | Inorganic salt | Lithium bromide | Number of moles relative to 100 mol of water | 12.2 | 11.9 | 11.6 |
| | Crystal nucleating agent | Sodium chloride | | 2.6 | 2.6 | 2.6 |
| | | Sodium bromide | | 1.5 | 1.5 | 1.5 |
| | Defoaming agent | Grade name | | S-25 | K-301 | K-301 |
| | | Type | | Surfactant | Oil | Oil |
| | | Added amount | % by weight | 0.2 | 0.2 | 0.2 |
| | Thickener | HEC | % by weight | 0.7 | 0.7 | 0.7 |
| | Number of moles of crystal nucleating agent | Sodium chloride + Sodium bromide | - | 4.1 | 4.1 | 4.1 |
| Ion concentration | Lithium ions (Li⁺) | | Number of moles relative to 100 mol of water | 12.2 | 11.9 | 11.6 |
| | Bromide ions (Br⁻) | | | 13.7 | 13.4 | 13.1 |

**(Table 3)**

| | | | | Example 22 | Example 23 | Example 24 |
|---|---|---|---|---|---|---|
| Blended amount | Inorganic salt | Lithium bromide | Number of moles relative to 100 mol of water | 11.3 | 12.2 | 12.2 |
| | Crystal | Sodium chloride | | 2.6 | 2.3 | 2.0 |
| | nucleating agent | Sodium bromide | | 1.5 | 1.3 | 1.2 |
| | Defoaming agent | Grade name | | K-301 | K-301 | K-301 |
| | | Type | | Oil | Oil | Oil |
| | | Added amount | % by weight | 0.2 | 0.2 | 0.2 |
| | Thickener | HEC | % by weight | 0.9 | 0.7 | 0.7 |
| | Number of moles of crystal nucleating agent | Sodium chloride + Sodium bromide | - | 4.1 | 3.6 | 3.2 |
| Ion concentration | Lithium ions (Li⁺) | | Number of moles relative to 100 mol of water | 11.3 | 12.2 | 12.2 |
| | Bromide ions (Br⁻) | | | 12.8 | 13.5 | 13.4 |

**(Table 3)**

| | | | | Example 15 | Example 16 | Example 17 | Example 18 |
|---|---|---|---|---|---|---|---|
| Evaluation result | -80°C to -30°C cycle test | Frequency at which melting temperature was exhibited at temperature of lower than -68.5°C | % | 100 | 100 | 100 | 100 |
| | | Frequency at which melting temperature was exhibited at temperature of -68.5°C to -66°C | % | 0 | 0 | 0 | 0 |
| | | Frequency at which melting temperature was not exhibited at temperature of not higher than -66°C | % | 0 | 0 | 0 | 0 |
| | | Assessment | - | 5 | 5 | 5 | 5 |
| | | Average melting temperature | °C | -69.3 | -69.2 | -69.1 | -69.3 |
| | | Fixed-temperature retention | Assessment | G | G | G | G |
| | | Temperature keeping property | Assessment | E | E | E | E |
| | | Duration | Assessment | E | E | E | E |
| | | Presence or absence of sediment after cycle test | | G | G | G | G |

**(Table 3)**

| | | | | Example 19 | Example 20 | Example 21 |
|---|---|---|---|---|---|---|
| Evaluation result | -80°C to -30°C cycle test | Frequency at which melting temperature was exhibited at temperature of lower than -68.5°C | % | 100 | 100 | 100 |
| | | Frequency at which melting temperature was exhibited at temperature of -68.5°C to -66°C | % | 0 | 0 | 0 |
| | | Frequency at which melting temperature was not exhibited at temperature of not higher than -66°C | % | 0 | 0 | 0 |
| | | Assessment | - | 5 | 5 | 5 |
| | | Average melting temperature | °C | -69.1 | -69.1 | -69.2 |
| | | Fixed-temperature retention | Assessment | G | G | G |
| | | Temperature keeping property | Assessment | E | E | E |
| | | Duration | Assessment | E | E | E |
| | | Presence or absence of sediment after cycle test | | G | G | G |

**(Table 3)**

| | | | | Example 22 | Example 23 | Example 24 |
|---|---|---|---|---|---|---|
| Evaluation result | -80°C to -30°C cycle test | Frequency at which melting temperature was exhibited at temperature of lower than -68.5°C | % | 100 | 100 | 100 |
| | | Frequency at which melting temperature was exhibited at temperature of -68.5°C to -66°C | % | 0 | 0 | 0 |
| | | Frequency at which melting temperature was not exhibited at temperature of not higher than -66°C | % | 0 | 0 | 0 |
| | | Assessment | - | 5 | 5 | 5 |
| | | Average melting temperature | °C | -69.1 | -69.1 | -69.1 |
| | | Fixed-temperature retention | Assessment | G | G | G |
| | | Temperature keeping property | Assessment | E | E | E |
| | | Duration | Assessment | E | E | E |
| | | Presence or absence of sediment after cycle test | | G | G | G |

**(Table 3)**

| | | | | Example 15 | Example 16 | Example 17 | Example 18 |
|---|---|---|---|---|---|---|---|
| Evaluation result | -80°C to 20°C cycle test | Frequency at which melting temperature was exhibited at temperature of lower than -68.5°C | % | 100 | 100 | 100 | 100 |
| | | Frequency at which melting temperature was exhibited at temperature of -68.5°C to -66°C | % | 0 | 0 | 0 | 0 |
| | | Frequency at which melting temperature was not exhibited at temperature of not higher than -66°C | % | 0 | 0 | 0 | 0 |
| | | Assessment | - | 5 | 5 | 5 | 5 |
| | | Average melting temperature | °C | -69.3 | -69.1 | -69.1 | -69.1 |
| | | Fixed-temperature retention | Assessment | G | G | G | G |
| | | Temperature keeping property | Assessment | E | E | E | E |
| | | Duration | Assessment | E | E | E | E |
| | | Presence or absence of sediment after cycle test | | G | G | G | G |
| | Easy handling | | | G | G | G | G |

**(Table 3)**

| | | | | Example 19 | Example 20 | Example 21 |
|---|---|---|---|---|---|---|
| Evaluation result | -80°C to 20°C cycle test | Frequency at which melting temperature was exhibited at temperature of lower than -68.5°C | % | 80 | 100 | 100 |
| | | Frequency at which melting temperature was exhibited at temperature of -68.5°C to -66°C | % | 15 | 0 | 0 |
| | | Frequency at which melting temperature was not exhibited at temperature of not higher than -66°C | % | 5 | 0 | 0 |
| | | Assessment | - | 4 | 5 | 5 |
| | | Average melting temperature | °C | -68.5 | -69.1 | -69.2 |
| | | Fixed-temperature retention | Assessment | G | G | G |
| | | Temperature keeping property | Assessment | G | E | E |
| | | Duration | Assessment | E | E | E |
| | | Presence or absence of sediment after cycle test | | G | G | G |
| | Easy handling | | | G | G | G |

**(Table 3)**

| | | | | Example 22 | Example 23 | Example 24 |
|---|---|---|---|---|---|---|
| Evaluation result | -80°C to 20°C cycle test | Frequency at which melting temperature was exhibited at temperature of lower than -68.5°C | % | 75 | 100 | 75 |
| | | Frequency at which melting temperature was exhibited at temperature of -68.5°C to -66°C | % | 10 | 0 | 25 |
| | | Frequency at which melting temperature was not exhibited at temperature of not higher than -66°C | % | 15 | 0 | 0 |
| | | Assessment | - | 4 | 5 | 4 |
| | | Average melting temperature | °C | -68.6 | -69.1 | -68.7 |
| | | Fixed-temperature retention | Assessment | G | G | G |
| | | Temperature keeping property | Assessment | G | E | G |
| | | Duration | Assessment | G | E | E |
| | | Presence or absence of sediment after cycle test | | G | G | G |
| | Easy handling | | | G | G | G |

### [Table 4]

**(Table 4)**

| | | | | Example 25 | Example 26 | Example 27 | Example 28 |
|---|---|---|---|---|---|---|---|
| Blended amount | Inorganic salt | Lithium bromide | Number of moles relative to 100 mol of water | 12.2 | 12.2 | 12.2 | 12.2 |
| | Crystal nucleating agent | Sodium chloride | | 2.6 | 2.6 | 2.6 | 2.6 |
| | | Sodium bromide | | 1.5 | 1.5 | 1.5 | 1.5 |
| | Alkali metal salt of higher fatty acid | Grade name | | KS-3 | KS-3 | KS-3 | KS-3 |
| | | Compound name | | Potassium laurate | Potassium laurate | Potassium laurate | Potassium laurate |
| | | Added amount | % by weight | 0.03 | 0.02 | 0.01 | 0.005 |
| | Thickener | HEC | % by weight | 0.65 | 0.65 | 0.65 | 0.65 |
| | Number of moles of crystal nucleating agent | Sodium chloride + Sodium bromide | - | 4.1 | 4.1 | 4.1 | 4.1 |
| Ion concentration | Lithium ions (Li⁺) | | Number of moles relative to 100 mol of water | 12.2 | 12.2 | 12.2 | 12.2 |
| | Bromide ions (Br⁻) | | | 13.7 | 13.7 | 13.7 | 13.7 |

**(Table 4)**

| | | | | Example 29 | Example 30 | Example 31 |
|---|---|---|---|---|---|---|
| Blended amount | Inorganic salt | Lithium bromide | Number of moles relative to 100 mol of water | 12.2 | 11.9 | 11.6 |
| | Crystal nucleating agent | Sodium chloride | | 2.6 | 2.6 | 2.6 |
| | | Sodium bromide | | 1.5 | 1.5 | 1.5 |
| | Alkali metal salt of higher fatty acid | Grade name | | KS-3 | KSt | KSt |
| | | Compound name | | Potassium laurate | Potassium stearate | Potassium stearate |
| | | Added amount | % by weight | 0.0025 | 0.03 | 0.02 |
| | Thickener | HEC | % by weight | 0.65 | 0.65 | 0.65 |
| | Number of moles of crystal nucleating agent | Sodium chloride + Sodium bromide | - | 4.1 | 4.1 | 4.1 |
| Ion concentration | Lithium ions (Li⁺) | | Number of moles relative to 100 mol of water | 12.2 | 12.2 | 12.2 |
| | Bromide ions (Br⁻) | | | 13.7 | 13.7 | 13.7 |

**(Table 4)**

| | | | | Example 32 | Example 33 | Example 34 |
|---|---|---|---|---|---|---|
| Blended amount | Inorganic salt | Lithium bromide | Number of moles relative to 100 mol of water | 11.3 | 12.2 | 12.2 |
| | Crystal nucleating agent | Sodium chloride | | 2.6 | 2.6 | 2.6 |
| | | Sodium bromide | | 1.5 | 1.5 | 1.5 |
| | Alkali metal salt of higher fatty acid | Grade name | | KSt | KSt | KSt |
| | | Compound name | | Potassium stearate | Potassium stearate | Potassium stearate |
| | | Added amount | % by weight | 0.01 | 0.005 | 0.0025 |
| | Thickener | HEC | % by weight | 0.65 | 0.65 | 0.65 |
| | Number of moles of crystal nucleating agent | Sodium chloride + Sodium bromide | - | 4.1 | 4.1 | 4.1 |
| Ion concentration | Lithium ions (Li⁺) | | Number of moles relative to 100 mol of water | 12.2 | 12.2 | 12.2 |
| | Bromide ions (Br⁻) | | | 13.7 | 13.7 | 13.7 |

**(Table 4)**

| | | | | Example 25 | Example 26 | Example 27 | Example 28 |
|---|---|---|---|---|---|---|---|
| Evaluation result | -80°C to -30°C cycle test | Frequency at which melting temperature was exhibited at temperature of lower than -68.5°C | % | 100 | 100 | 100 | 100 |
| | | Frequency at which melting temperature was exhibited at temperature of -68.5°C to -66°C | % | 0 | 0 | 0 | 0 |
| | | Frequency at which melting temperature was not exhibited at temperature of not higher than -66°C | % | 0 | 0 | 0 | 0 |
| | | Assessment | - | 5 | 5 | 5 | 5 |
| | | Average melting temperature | °C | -69.8 | -70.0 | -69.8 | -69.6 |
| | | Fixed-temperature retention | Assessment | G | G | G | G |
| | | Temperature keeping property | Assessment | E | E | E | E |
| | | Duration | Assessment | E | E | E | E |
| | | Presence or absence of sediment after cycle test | | G | G | G | G |

**(Table 4)**

| | | | | Example 29 | Example 30 | Example 31 |
|---|---|---|---|---|---|---|
| Evaluation result | -80°C to -30°C cycle test | Frequency at which melting temperature was exhibited at temperature of lower than -68.5°C | % | 100 | 100 | 100 |
| | | Frequency at which melting temperature was exhibited at temperature of -68.5°C to -66°C | % | 0 | 0 | 0 |
| | | Frequency at which melting temperature was not exhibited at temperature of not higher than -66°C | % | 0 | 0 | 0 |
| | | Assessment | - | 5 | 5 | 5 |
| | | Average melting temperature | °C | -69.7 | -69.5 | -69.5 |
| | | Fixed-temperature retention | Assessment | G | G | G |
| | | Temperature keeping property | Assessment | E | E | E |
| | | Duration | Assessment | E | E | E |
| | | Presence or absence of sediment after cycle test | | G | G | G |

**(Table 4)**

| | | | | Example 32 | Example 33 | Example 34 |
|---|---|---|---|---|---|---|
| Evaluation result | -80°C to -30°C cycle test | Frequency at which melting temperature was exhibited at temperature of lower than -68.5°C | % | 100 | 100 | 100 |
| | | Frequency at which melting temperature was exhibited at temperature of -68.5°C to -66°C | % | 0 | 0 | 0 |
| | | Frequency at which melting temperature was not exhibited at temperature of not higher than -66°C | % | 0 | 0 | 0 |
| | | Assessment | - | 5 | 5 | 5 |
| | | Average melting temperature | °C | -69.5 | -69.5 | -69.2 |
| | | Fixed-temperature retention | Assessment | G | G | G |
| | | Temperature keeping property | Assessment | E | E | E |
| | | Duration | Assessment | E | E | E |
| | | Presence or absence of sediment after cycle test | | G | G | G |

**(Table 4)**

| | | | | Example 25 | Example 26 | Example 27 | Example 28 |
|---|---|---|---|---|---|---|---|
| Evaluation result | -80°C to 20°C cycle test | Frequency at which melting temperature was exhibited at temperature of lower than -68.5°C | % | 100 | 100 | 100 | 100 |
| | | Frequency at which melting temperature was exhibited at temperature of -68.5°C to -66°C | % | 0 | 0 | 0 | 0 |
| | | Frequency at which melting temperature was not exhibited at temperature of not higher than -66°C | % | 0 | 0 | 0 | 0 |
| | | Assessment | - | 5 | 5 | 5 | 5 |
| | | Average melting temperature | °C | -69.9 | -70.0 | -69.8 | -69.7 |
| | | Fixed-temperature retention | Assessment | G | G | G | G |
| | | Temperature keeping property | Assessment | E | E | E | E |
| | | Duration | Assessment | E | E | E | E |
| | | Presence or absence of sediment after cycle test | | G | G | G | G |
| | Easy handling | | | G | G | G | G |

**(Table 4)**

| | | | | Example 29 | Example 30 | Example 31 |
|---|---|---|---|---|---|---|
| Evaluation result | -80°C to 20°C cycle test | Frequency at which melting temperature was exhibited at temperature of lower than -68.5°C | % | 100 | 100 | 100 |
| | | Frequency at which melting temperature was exhibited at temperature of -68.5°C to -66°C | % | 0 | 0 | 0 |
| | | Frequency at which melting temperature was not exhibited at temperature of not higher than -66°C | % | 0 | 0 | 0 |
| | | Assessment | - | 5 | 5 | 5 |
| | | Average melting temperature | °C | -69.8 | -69.5 | -69.5 |
| | | Fixed-temperature retention | Assessment | G | G | G |
| | | Temperature keeping property | Assessment | G | E | E |
| | | Duration | Assessment | E | E | E |
| | | Presence or absence of sediment after cycle test | | G | G | G |
| | Easy handling | | | G | G | G |

**(Table 4)**

| | | | | Example 32 | Example 33 | Example 34 |
|---|---|---|---|---|---|---|
| Evaluation result | -80°C to 20°C cycle test | Frequency at which melting temperature was exhibited at temperature of lower than -68.5°C | % | 100 | 100 | 100 |
| | | Frequency at which melting temperature was exhibited at temperature of -68.5°C to -66°C | % | 0 | 0 | 0 |
| | | Frequency at which melting temperature was not exhibited at temperature of not higher than -66°C | % | 0 | 0 | 0 |
| | | Assessment | - | 5 | 5 | 5 |
| | | Average melting temperature | °C | -69.3 | -69.5 | -69.2 |
| | | Fixed-temperature retention | Assessment | G | G | G |
| | | Temperature keeping property | Assessment | E | E | E |
| | | Duration | Assessment | E | E | E |
| | | Presence or absence of sediment after cycle test | | G | G | G |
| | Easy handling | | | G | G | G |

### Industrial Applicability

A cold storage material composition in accordance with an embodiment of the present invention, a cold storage material including the cold storage material composition, a transport container, and a cold storage material composition produced by a method of producing a cold storage material composition in accordance with an embodiment of the present invention each enable temperature control target articles which need to be in respective specific control temperatures to be stably stored or transported in the respective control temperatures of the temperature control target articles in specific environments. Further, a method of using a cold storage material composition in accordance with an embodiment of the present invention enables temperature control target articles which need to be in respective specific control temperatures to be stably stored or transported in the respective control temperatures of the temperature control target articles in specific environments. Thus, an embodiment of the present invention is suitably applicable to storage and transportation of, for example, cells, pharmaceutical products, regenerative cells, specimens, foods, and the like.

## Claims

1. A cold storage material composition comprising:
water;
lithium ions;
bromide ions;
a crystal nucleating agent; and
a defoaming agent and/or an alkali metal salt of a higher fatty acid,
the crystal nucleating agent being contained in an amount of not less than 2.0 mol relative to 100 mol of the water,
the defoaming agent and the alkali metal salt of the higher fatty acid being contained in a total amount of not less than 0.0025% by weight relative to 100% by weight of the cold storage material composition.

2. The cold storage material composition as set forth in claim 1, wherein the defoaming agent is an oil-type defoaming agent.

3. The cold storage material composition as set forth in claim 1, wherein the alkali metal salt of the higher fatty acid is water-soluble.

4. The cold storage material composition as set forth in claim 1, wherein the lithium ions are contained in an amount of 7.6 mol to 12.6 mol and the bromide ions are contained in an amount of 8.1 mol to 14.6 mol, relative to 100 mol of the water.

5. The cold storage material composition as set forth in claim 1, wherein the lithium ions are contained in an amount of 11.0 mol to 12.5 mol relative to 100 mol of the water.

6. The cold storage material composition as set forth in claim 1, wherein the crystal nucleating agent is contained in an amount of not less than 3.2 mol relative to 100 mol of the water.

7. The cold storage material composition as set forth in claim 1, further comprising a thickener.

8. The cold storage material composition as set forth in claim 7, wherein the thickener is hydroxyethyl cellulose.

9. A cold storage material comprising a cold storage material composition recited in any one of claims 1 to 8.

10. A transport container comprising a cold storage material recited in claim 9.

11. A method of using a cold storage material composition, comprising:
a solidifying step of keeping a cold storage material composition at a temperature lower than a melting temperature of the cold storage material composition to solidify the cold storage material composition, the cold storage material composition containing water, lithium ions, bromide ions, a crystal nucleating agent, and a defoaming agent and/or an alkali metal salt of a higher fatty acid; and
a maintaining step of maintaining part or whole of a target object at a temperature identical to the melting temperature of the cold storage material composition in an environment at a temperature which exceeds the melting temperature of the cold storage material composition,
in the cold storage material composition,
the crystal nucleating agent being contained in an amount of not less than 2.0 mol relative to 100 mol of the water,
the defoaming agent and the alkali metal salt of the higher fatty acid being contained in a total amount of not less than 0.0025% by weight relative to 100% by weight of the cold storage material composition.

12. The method as set forth in claim 11, wherein, in the solidifying step, the temperature lower than the melting temperature is a temperature of not higher -80°C.

13. The method as set forth in claim 11, wherein, in the solidifying step, the temperature lower than the melting temperature is -85°C to -76°C.
